# EUROPÄISCHE PATENTANMELDUNG

(11) **EP 4 753 039 A1**
(43) Veröffentlichungstag der Anmeldung: **03.06.2026**
(21) Anmeldenummer: 25217070.9
(22) Anmeldetag: 19.11.2025
(51) Int. Cl.: H01M 50/209, H01M 50/242, H01M 50/249, H01M 50/262, H01M 50/213

(54) **ZELLHALTER FÜR EINE BATTERIEANORDNUNG**

(30) Priorität: 02.12.2024 DE 102024211504
(71) Anmelder: Robert Bosch GmbH, 70442 Stuttgart (DE)
(72) Erfinder: Koeder, Thilo, 70839 Gerlingen (DE); Gerold, Simon, 70565 Stuttgart (DE); Schnabel, Nicolai, 74074 Heilbronn (DE); Kunert, Peter, 72805 Lichtenstein (DE); Morlok, Frederik, 72218 Wildberg Gueltlingen (DE); Thiel, Tobias, 72770 Reutlingen (DE); Bodur, Yusuf Ziya, 72760 Reutlingen (DE); Mehlo, Dennis, 72766 Reutlingen (DE)

(57) **Zusammenfassung**

Die vorliegende Erfindung betrifft einen Zellhalter für einen Batteriepack, insbesondere für ein Elektrofahrrad, umfassend eine im Wesentlichen hohlzylindrische Wand, welche zumindest teilweise eine Zellaufnahme umschließt, die eingerichtet ist, zur Aufnahme einer Batteriezelle, und ein Halteelement, welches an der Wand angeordnet ist, wobei eine Außenabmessung der Zellaufnahme durch eine Zell-Außenabmessung der Batteriezelle definiert ist, und wobei das Halteelement radial in die Zellaufnahme vorsteht.

## Beschreibung

### Stand der Technik

Die vorliegende Erfindung betrifft einen Zellhalter für eine Batterieanordnung, eine Batterieanordnung, und ein Elektrofahrrad.

Bekannt sind Batterieanordnungen für Elektrofahrräder, welche einen Batteriepack umfassen, der üblicherweise einen Zellhalter mit mehreren darin gehaltenen Batteriezellen aufweist. Der Zellhalter bietet dabei einen mechanischen Schutz und eine unbewegliche Halterung der Batteriezellen. Zellhalter und Batterien, und beispielsweise weitere Komponenten, bilden üblicherweise einen Batteriepack. Der Batteriepack ist häufig innerhalb eines Gehäuses angeordnet. Zum Schutz der Batteriezellen vor Beschädigungen, beispielsweise durch eventuelle Stürze der Batterieanordnung, oder durch Vibrationen, ist es üblicherweise erforderlich, eine unbewegliche Halterung der Batteriezellen sicherzustellen. Häufig ist dies bei verwendeten Konstruktionen und Materialien nicht oder nur eingeschränkt über die Lebensdauer der Batterieanordnung möglich.

### Offenbarung der Erfindung

Der erfindungsgemäße Zellhalter mit den Merkmalen des Anspruchs 1 zeichnet sich demgegenüber dadurch aus, dass mittels einer einfachen und kostengünstig herstellbaren Konstruktion eine besonders zuverlässige und robuste unbewegliche Halterung von Batteriezellen bereitgestellt werden kann. Dies wird erfindungsgemäß erreicht durch einen Zellhalter für eine Batterieanordnung, vorzugsweise für ein Elektrofahrrad, umfassend eine im Wesentlichen hohlzylindrische Wand und ein Halteelement. Die hohlzylindrische Wand umschließt zumindest teilweise eine Zellaufnahme. Die Zellaufnahme ist eingerichtet zur Aufnahme einer, insbesondere zylindrischen, Batteriezelle. Das Halteelement ist an der Wand angeordnet. Eine Außenabmessung der Zellaufnahme ist dabei im Wesentlichen durch eine Zell-Außenabmessung der Batteriezelle definiert. Insbesondere können dabei Toleranzen in Zelldurchmessern und/oder der Außenabmessung der Zellaufnahme berücksichtigt sein. Dabei steht das Halteelement radial in die Zellaufnahme vor und/oder, insbesondere nach radial außen, ab.

Weiterhin weist die Wand eine Aussparung auf, die sich entlang der Zellaufnahme erstreckt. Als entlang der Zellaufnahme entspricht insbesondere eine Längserstreckung einer in der Zellaufnahme aufgenommenen Batterie. Das Halteelement ist dabei als ein, vorzugsweise einseitiger, Federarm ausgebildet, wobei der Federarm in Umfangsrichtung der Wand auf einer ersten Seite vollständig mit der Wand verbunden und auf einer zweiten Seite von der Aussparung in der Wand begrenzt ist. Insbesondere sind Federarm und Wand gemeinsam als ein einstückiges Bauteil ausgebildet. Bevorzugt ist der Federarm auf zwei Seiten mit der Wand vollständig verschwunden, insbesondere an einer ersten Seite in Umfangsrichtung und an einer zweiten Seite, welche einen Fuß des Federarms bildet.

Insbesondere ist die Zellaufnahme als im Wesentlichen zylindrischer Hohlraum ausgebildet, innerhalb welchem die Batteriezelle angeordnet werden kann. Bevorzugt ist die Zellaufnahme ausschließlich durch die hohlzylindrische Wand zumindest teilweise umschlossen. Das heißt, bevorzugt wird die Zellaufnahme durch eine Innenseite der hohlzylindrischen Wand definiert. Beispielsweise kann die Zellaufnahme dabei einseitig offen sein, insbesondere in axialer Richtung, so dass die Batteriezelle in der Zellaufnahme angeordnet und von dieser entnommen werden kann.

Insbesondere ist das Halteelement dabei derart in die Zellaufnahme vorstehend ausgebildet, dass das Halteelement lokal den Freiraum der Zellaufnahme verkleinert. Alternativ oder zusätzlich bevorzugt steht das Haltelement nach außen ab.

Mit anderen Worten wird ein Zellhalter bereitgestellt, welcher eine hohlzylindrische Wand aufweist, die eine Zellaufnahme umschließt. An der Wand ist dabei insbesondere an der Innenseite und/oder an der Außenseite ein zusätzliches Halteelement vorgesehen, welches nach radial innen in die Zellaufnahme vorsteht. Dadurch wird die Zellaufnahme lokal verkleinert, sodass lokal der Platz für die Batteriezelle eingeschränkt wird. Dadurch wird bei der Aufnahme der Batteriezelle, das heißt beim Einschieben, das Halteelement nach radial außen durch die Batteriezelle weggedrängt, wodurch die hohlzylindrische Wand zumindest lokal verformt wird. Dadurch wird mittels der Wand und mittels des Halteelements eine Kraft auf die Batteriezelle ausgeübt, welche die Batteriezelle fest in der Zellaufnahme hält. Alternativ oder zusätzlich bevorzugt steht das Halteelement nach außen ab. Dadurch kann eine Einspannung des Zellhalters beispielsweise innerhalb eines Gehäuses ermöglicht werden, wodurch eine spielfreie und robuste Halterung des Zellhalters innerhalb des Gehäuses bereitgestellt werden kann.

Der Zellhalter bietet somit den Vorteil, dass eine besonders zuverlässige und robuste spielfreie Halterung der Batteriezelle in der Zellaufnahme ermöglicht werden kann. Durch das Halteelement, welches unmittelbar an der Wand angeordnet ist, wirkt die Wand zumindest teilweise als an der Einspannung der Batteriezelle beteiligtes Element mit. Somit können zudem Größentoleranzen am Zellhalter und an der Batteriezelle ausgeglichen werden, wobei jederzeit eine zuverlässige Halterung der Batteriezelle ermöglicht wird.

Die Unteransprüche haben bevorzugte Weiterbildungen der Erfindung zum Inhalt.

Bevorzugt ist das Halteelement über einen Radius mit der Wand verbunden. Insbesondere ist der Radius auf der zweiten Seite, insbesondere an der der Fuß des Federarms angeordnet ist, angeordnet. Alternativ bevorzugt kann statt einem Radius eine Phase vorgesehen sein. Alternativ oder zusätzlich bevorzugt ist ein Radius an der ersten Seite, das heißt insbesondere im Umfangsrichtung, vorgesehen. Dadurch kann ein Halteelement in Form eines geschwungenen vorstehenden Bereichs vorgesehen sein, welches kontinuierlich in die Wand übergeht. Damit kann eine besonders vorteilhafte Kraftverteilung bereitgestellt werden, in dem durch eine spannungsoptimierte Geometrie Spannungsspitzen an dem Halteelement vermieden werden können.

Besonders bevorzugt weist der Zellhalter ein erstes Halteelement und ein zweites Halteelement auf, wobei die beiden Halteelemente jeweils als einseitige Federelemente ausgebildet sind. Das erste Halteelement und das zweite Halteelement sind dabei in Umfangsrichtung durch eine gemeinsame Aussparung begrenzt. Vorzugsweise können mehrere erste Halteelemente und zweite Halteelemente vorgesehen sein. Das heißt, es sind zwei unterschiedliche Halteelemente vorgesehen, welche, insbesondere entlang der Umfangsrichtung, jeweils gegenüberliegend an einer gemeinsamen Aussparung angeordnet sind. Dadurch kann eine besonders einfache und kostengünstige und robuste Geometrie des Zellhalters bereitgestellt werden.

Vorzugsweise steht das erste Halteelement radial in die Zellaufnahme vor, das heißt radial nach innen, und das zweite Halteelement steht radial nach außen ab. Damit kann durch das erste Halteelement eine radiale Anspannung der Batteriezelle innerhalb der Zellaufnahme, und durch das zweite Halteelement eine radiale Anspannung des Zellhalters beispielsweise innerhalb eines Gehäuses bereitgestellt werden.

Weiter bevorzugt ist das Halteelement an einer Kante oder an einer Schulter der Wand angeordnet. Insbesondere ist das Halteelement an einer axialen stirnseitigen Begrenzung, das heißt Kante oder Schulter, angeordnet. Damit kann beispielsweise eine Einspannung der Batteriezelle nahe an dessen axialen Enden bereitgestellt werden, wodurch eine besonders zuverlässige und robuste Einspannung der Batteriezellen ermöglicht werden kann.

Weiter bevorzugt ist das Halteelement durch einen eingerückten Wandbereich oder durch einen ausgerückten Wandbereich gebildet. Damit kann eine besonders einfache und kostengünstige sowie robuste Konstruktion des Zellhalters ermöglicht werden.

Bevorzugt sind die Wand und das Halteelement gemeinsam als ein einstückiges Bauteil ausgebildet. Insbesondere kann das Halteelement somit auch als radial nach innen vorstehender Teil der Wand angesehen werden. Somit kann eine besonders einfache und kostengünstige sowie robuste Konstruktion des Zellhalters bereitgestellt werden.

Vorzugsweise ist das Halteelement an einem vorbestimmten Wandbereich der Wand angeordnet, wobei der Wandbereich sich durchgängig über mindestens 20 Prozent eines Umfangs und über mindestens 20 Prozent einer axialen Länge der Zellaufnahme erstreckt. Mit anderen Worten ist das Halteelement an einem durchgängigen Teilbereich der hohlzylindrischen Wand angeordnet, welcher sich über einen signifikanten Teil der Fläche der Zellaufnahme durchgängig, das heißt ohne Unterbrechungen, wie beispielsweise Öffnungen oder Einschnitte oder dergleichen, erstreckt. Dadurch wird sichergestellt, dass durch das Anordnen der Batteriezelle innerhalb der Zellaufnahme zumindest der Wandbereich, das heißt ein signifikanter Anteil der Wand, sich verformt, um die Haltekraft ausüben zu können. Insbesondere unterscheidet sich die Konstruktion somit von einer federnden Lasche, welche beispielsweise als schmales, streifenförmiges Element ausgebildet ist, welches elastisch nachgiebig ist, und welches nur einen kleinen Teilbereich in Umfangsrichtung umfassen kann.

Besonders bevorzugt ist der Zellhalter so ausgelegt, dass der vorbestimmte Wandbereich durch eine in der Zellaufnahme angeordnete Batteriezelle nach radial außen elastisch verformt wird, um eine Haltekraft auf die Batteriezelle auszuüben. Das heißt, der Wandbereich ist, insbesondere mit dem Halteelement, derart ausgebildet, dass dieser durch das Einschieben der Batteriezelle durch die Batteriezelle elastisch nach radial außen verformt, das heißt weggedrängt, wird. Dadurch bewirkt der verformte Wandbereich eine Haltekraft, welche über das Halteelement auf die Batteriezelle ausgeübt wird. Damit kann besonders zuverlässig und dauerhaft sichergestellt werden, dass die Batteriezelle mittels der Haltekraft robust und unbeweglich gehalten wird.

Bevorzugt weist das Halteelement eine im Wesentlichen quaderförmige Geometrie auf. Das heißt, insbesondere weist das Halteelement einen quaderförmigen Querschnitt auf. Besonders bevorzugt kann der Querschnitt dabei rechteckig in einer zur Achse der Zellaufnahme orthogonalen Richtung und/oder in einer Radialebene und/oder in einer zur Achse orthogonalen Ebene ausgebildet sein. Bevorzugt weist das Halteelement dabei eine ebene, insbesondere rechteckige, Kontaktfläche auf, welche nach radial innen gewandt ist, und insbesondere eingerichtet ist zum Kontakt mit der Batteriezelle.

Bevorzugt weist das Halteelement eine axiale Länge von mindestens 1mm, bevorzugt mindestens 3 mm, insbesondere maximal 10mm, auf. Vorzugsweise weist das Halteelement eine Breite, insbesondere in Umfangsrichtung und/oder in tangentialer Richtung, von mindestens 1 mm, bevorzugt maximal 5 mm, auf.

Besonders bevorzugt weist das Halteelement eine Höhe, insbesondere in radialer Richtung, von mindestens 1 mm auf. Besonders bevorzugt ist die Höhe des Halteelements maximal 3 mm. Dadurch kann besonders zuverlässig sichergestellt werden, dass Toleranzen von Zellhalter und/oder Batteriezelle zuverlässig ausgeglichen werden können bei robuster spielfreier Halterung der Batteriezelle im Zellhalter.

Vorzugsweise ist das Halteelement an einem stirnseitigen Ende der Zeilaufnahme angeordnet. Mit anderen Worten ist das Halteelement, vorzugsweise unmittelbar, an eine Stirnseite der Zellaufnahme angrenzend angeordnet. Dadurch kann in einem Bereich nahe der Stirnseite der Batteriezelle die Haltekraft auf die Batteriezelle ausgeübt werden.

Weiter bevorzugt weist die Wand des Zellhalters eine radiale Ausnehmung auf, welche radial außerhalb des Halteelements angeordnet ist. Insbesondere ist die radiale Ausnehmung in Form einer Vertiefung an der radial äußeren Mantelfläche der hohlzylindrischen Wand ausgebildet. Bevorzugt erstreckt sich die Ausnehmung über mindestens 15 Prozent eines Umfangs der Wand, bevorzugt über mindestens 15 Prozent einer axialen Länge der Wand. Insbesondere weist die Ausnehmung eine Tiefe in radialer Richtung von mindestens 0,5 mm, bevorzugt maximal 2 mm, auf. Die radiale Ausnehmung an der Wand, radial außerhalb des Halteelements, erlaubt einen Freiraum zur Verformung der Wand beim Einschieben der Batteriezelle. Das heißt, die radiale Ausnehmung bietet Freiraum im Bereich des Halteelements zur elastischen Verformung der Wand, ohne dass eine Außenabmessung des Zellhalters signifikant vergrößert wird. Dadurch kann beispielsweise die elastische Verformung der Wand durch und im Bereich des Halteelements bereitgestellt werden, ohne dass ein Gehäuse, innerhalb welchem der Zellhalter angeordnet werden kann, zur Aufnahme der Verformung der Wand vergrößert oder angepasst werden muss. Das heißt, es kann eine besonders kompakte und platzsparende sowie kostengünstige Konstruktion des Zellhalters und eines Gehäuses, in dem der Zellhalter angeordnet werden kann, bereitgestellt werden.

Bevorzugt umfasst der Zellhalter ferner ein erstes Federelement, welches eingerichtet ist, um eine erste Federkraft auf die Batteriezelle auszuüben, wenn die Batteriezelle in dem Zellhalter aufgenommen ist. Insbesondere wird somit als Federelement ein zusätzliches Element bereitgestellt, welches in Form der ersten Federkraft eine zusätzliche Kraft zur spielfreien und unbeweglichen Halterung der Batteriezelle im Zellhalter bereitstellen kann. Damit kann eine besonders zuverlässige Halterung der Batteriezelle bereitgestellt werden. Insbesondere sind Federelement und Halteelement an unterschiedlichen Umfangspositionen und/oder Axialpositionen der Zellaufnahme angeordnet.

Vorzugsweise ist das erste Federelement gemeinsam mit der Wand als ein einstückiges Bauteil ausgebildet. Das erste Federelement erstreckt sich dabei entlang einer Umfangsrichtung. Mit anderen Worten ist das erste Federelement als ein, vorzugsweise laschenförmiges oder zungenförmiges, Bauteil ausgebildet, welches sich entlang der Umfangsrichtung erstreckt. Insbesondere ist dabei ein in Umfangsrichtung liegendes Ende des Federelements einstückig mit der hohlzylindrischen Wand verbunden ausgebildet. Bevorzugt ist das entlang der Umfangsrichtung gegenüberliegende freie Ende des Federelements im unbelasteten Zustand nach radial innen in die Zellaufnahme vorstehend ausgebildet. Somit kann beispielsweise das Federelement durch das Anordnen der Batteriezelle in der Zellaufnahme elastisch verformt werden, so dass das Federelement durch dessen Verformung die erste Federkraft auf die Batteriezelle ausübt. Insbesondere erstreckt sich das erste Federelement somit schneckenförmig an der hohlzylindrischen Wand.

Weiter bevorzugt umfasst der Zellhalter ferner ein zweites Federelement, welches eingerichtet ist, um eine zweite Federkraft auf die Batteriezelle auszuüben, wenn die Batteriezelle in dem Zellhalter aufgenommen ist. Bevorzugt ist das zweite Federelement dabei gemeinsam mit der Wand als ein einstückiges Bauteil ausgebildet. Besonders bevorzugt erstreckt sich das zweite Federelement in axialer Richtung. Insbesondere ist somit ein weiteres zusätzliches Federelement vorgesehen, welches sich insbesondere im Wesentlichen entlang der axialen Richtung erstreckt. Das zweite Federelement kann beispielsweise als längliche, in axialer Richtung ausgerichtete, Lasche ausgebildet sein, welche ein axiales erstes Ende und ein axiales zweites Ende aufweist, wobei eines der beiden axialen Enden einstückig mit der hohlzylindrischen Wand ausgebildet ist. Insbesondere ragt das zweite Federelement dabei im unbelasteten Zustand nach radial in die Zellaufnahme hinein, sodass durch das Anordnen der Batteriezelle in der Zellaufnahme das zweite Federelement elastisch verformt wird, um somit die zweite Federkraft auf die Batteriezelle ausüben zu können. Damit kann eine besonders zuverlässige Halterung der Batteriezelle im Zellhalter spielfrei und unbeweglich bereitgestellt werden.

Weiterhin führt die Erfindung zu einer Batterieanordnung, umfassend einen Batteriepack. Der Batteriepack umfasst den beschriebenen Zellhalter. Ferner umfasst der Batteriepack mindestens eine Batteriezelle, welche in einer Zellaufnahme des Zellhalters angeordnet ist.

Bevorzugt umfasst die Batterieanordnung ferner ein Gehäuse, in welches der Batteriepack aufgenommen werden kann. Das Gehäuse ist insbesondere vorgesehen zum Schutz des Batteriepacks.

Weiterhin betrifft die Erfindung ein Elektrofahrrad, umfassend die beschriebene Batterieanordnung.

### Kurze Beschreibung der Zeichnungen

Nachfolgend werden Ausführungsbeispiele der Erfindung unter Bezugnahme auf die begleitenden Zeichnungen im Detail beschrieben. In der Zeichnung ist:
- Figur 1: eine vereinfachte schematische Ansicht eines Elektrofahrrads mit einer Batterieanordnung gemäß einem Beispiel,
- Figur 2: eine perspektivische Ansicht der Batterieanordnung des Elektrofahrrads der Figur 1,
- Figur 3: eine perspektivische Explosionsdarstellung der Batterieanordnung der Figur 2,
- Figur 4: eine perspektivische Explosionsdarstellung eines Details der Batterieanordnung der Figur 2,
- Figur 5: eine vereinfachte schematische Ansicht einer Batterieanordnung mit einem Zellhalter gemäß einem ersten Ausführungsbeispiel der Erfindung,
- Figur 6: eine Detailansicht des Zellhalters der Figur 5,
- Figur 7: eine weitere Ansicht des Zellhalters der Figur 5,
- Figur 8: eine perspektivische Detailansicht eines Zellhalters gemäß einem zweiten Ausführungsbeispiel der Erfindung,
- Figur 9: eine alternative Ansicht des Zellhalters der Figur 8,
- Figur 10: eine Detailansicht eines Zellhalters gemäß einem dritten Ausführungsbeispiel der Erfindung,
- Figur 11: eine Detailansicht eines Zellhalters gemäß einem vierten Ausführungsbeispiel der Erfindung,
- Figur 12: eine vereinfachte schematische Ansicht eines Zellhalters gemäß einem fünften Ausführungsbeispiel,
- Figur 13 bis Figur 15: vereinfachte schematische Ansichten des Zellhalters der Figur 12 bei der Montage der Batterieanordnung,
- Figur 16: vereinfachte schematische Ansichten eines Zellhalters gemäß einem sechsten Ausführungsbeispiel bei der Montage,
- Figur 17: eine perspektivische Ansicht einer Batterieanordnung mit einem Zellhalter gemäß einem siebten Ausführungsbeispiel,
- Figur 18: eine Detailansicht des Zellhalters der Figur 17,
- Figur 19: eine vereinfachte schematische Ansicht eines Zellhalters gemäß einem achten Ausführungsbeispiel,
- Figur 20: eine vereinfachte schematische Ansicht eines Zellhalters gemäß einem neunten Ausführungsbeispiel,
- Figur 21: eine vereinfachte schematische Ansicht eines Zellhalters gemäß einem zehnten Ausführungsbeispiel,
- Figur 22: eine vereinfachte schematische Ansicht eines Zellhalters gemäß einem elften Ausführungsbeispiel,
- Figur 23: eine perspektivische Ansicht eines Zellhalters gemäß einem zwölften Ausführungsbeispiel,
- Figur 24: eine vereinfachte schematische Ansicht einer mechanischen Spannung des Zellhalters der Figur 23,
- Figur 25: eine perspektivische Ansicht eines Zellhalters gemäß einem dreizehnten Ausführungsbeispiel,
- Figur 26: eine perspektivische Ansicht des Zellhalters der Figur 25 während des Zusammenbaus,
- Figur 27: eine perspektivische Ansicht eines Zellhalters gemäß einem vierzehnten Ausführungsbeispiel der Erfindung,
- Figur 28: eine alternative Ansicht des Zellhalters der Figur 27,
- Figur 29: eine Detailansicht des Zellhalters der Figur 27 in montiertem Zustand der Batterieanordnung, und
- Figur 30: ein Detail des Zellhalters der Figur 27.

### Ausführungsformen der Erfindung

Bevorzugt sind alle gleichen Bauteile, Elemente und/oder Einheiten in allen Figuren mit den gleichen Bezugszeichen versehen.

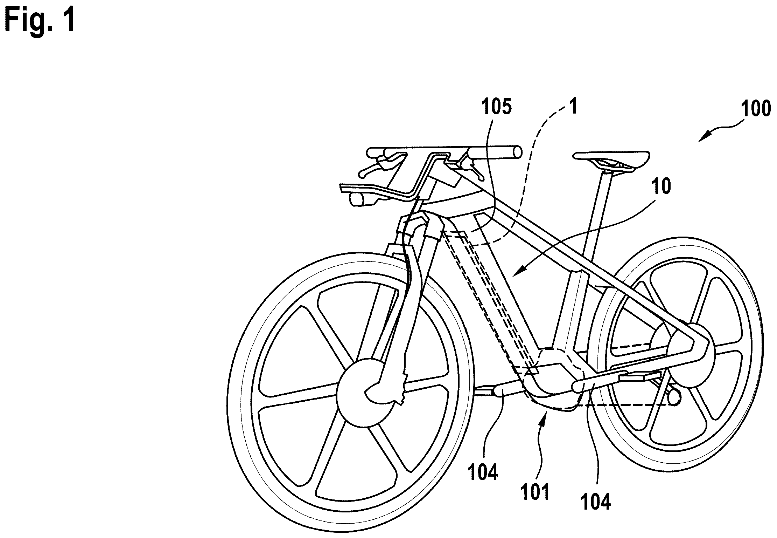

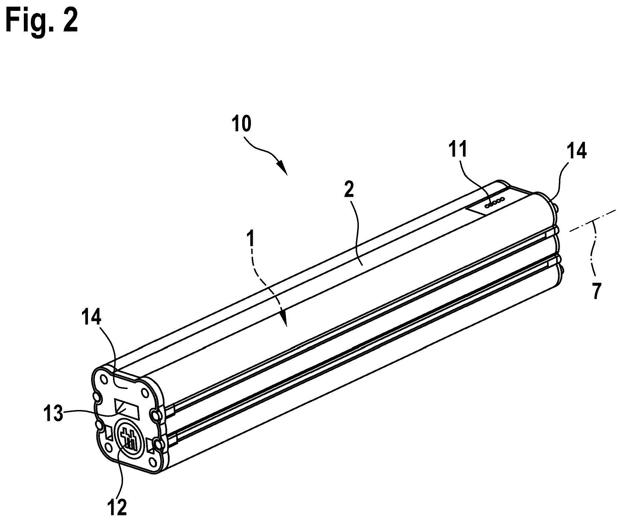

Figur 1 zeigt eine vereinfachte schematische Ansicht eines Elektrofahrrads 100 mit einer Batterieanordnung 10 gemäß einem Beispiel. Detailansichten der Batterieanordnung 10 dieses Beispiels sind in den Figuren 2 bis 4 dargestellt.

Das Elektrofahrrad 100 umfasst eine Antriebseinheit 101 mit einem Motor, der insbesondere ein Elektromotor ist. Der Motor kann mittels elektrischer Energie, die in der Batterieanordnung 10 gespeichert ist, versorgt werden.

Die Antriebseinheit 101 ist im Bereich eines Tretlagers des Elektrofahrrads 100 angeordnet, und somit als Mittelmotor ausgebildet.

Durch eine mittels des Motors erzeugten Motormoments kann eine durch Muskelkraft erzeugte Tretkraft eines Fahrers des Elektrofahrrads 100 motorisch unterstützt werden. Die Muskelkraft des Fahrers kann dabei über einen Kurbeltrieb mit Kurbeln 104 aufgebracht werden.

Die Batterieanordnung 10 kann im Inneren eines Fahrradrahmens 105 des Elektrofahrrads 100 angeordnet werden. Im Detail kann die Batterieanordnung 10 im Inneren eines Unterrohrs des Fahrradrahmens 105 aufgenommen werden.

Die Batterieanordnung 10 ist im Wesentlichen prismatisch ausgebildet und erstreckt sich entlang einer Längsrichtung 7 (vergleiche Figur 2). Insbesondere ist die Batterieanordnung 10 im Wesentlich quaderförmig ausgebildet.

Die Batterieanordnung umfasst ein Gehäuse 2 und einen Batteriepack 1, welcher innerhalb des Gehäuses 2 angeordnet ist.

Das Gehäuse 2 kann vorzugsweise aus Aluminium oder einer Aluminiumlegierung, oder alternativ aus einem anderen Metall gebildet sein. Weiter alternativ kann das Gehäuse 2 auch aus Kunststoff gebildet sein. Bevorzugt kann das Gehäuse 2 dabei aus einem Strangpressprofil gebildet sein.

Axiale Stirnseiten des Gehäuses 2 sind durch Endplatten 14 verschlossen, welche beispielsweise mit dem Gehäuse 2 verschraubt sein können.

An einer ersten Endplatte 14 befindet sich eine elektrische Schnittstelle 12, welche eingerichtet ist zur elektrischen Verbindung mit Komponenten des Elektrofahrrads 100 und/oder mit einer (nicht dargestellten) Ladevorrichtung. Bevorzugt kann die elektrische Schnittstelle 12 als eine Buchse ausgebildet sein, welche eingerichtet ist zur Verbindung mit einem (nicht dargestellten) Stecker.

An derselben ersten Endplatte 14 ist eine mechanische Schnittstelle 13 ausgebildet, welche eingerichtet ist zur mechanischen Befestigung der Batterieanordnung 10 am Fahrradrahmen 100. Beispielsweise kann die mechanische Schnittstelle 13 mit einem weiteren Schnittstellenelement des Fahrradrahmens 105 ausgebildet sein zum formschlüssigen Ineinandergreifen, um damit die Batterieanordnung 10 am Fahrradrahmen 105 zu fixieren.

Ferner umfasst die Batterieanordnung 10 eine Ein- und/oder Ausgabeeinheit 11, welche vorzugsweise eine Ladezustandsanzeige umfasst. Zusätzlich kann die Ein- und/oder Ausgabeeinheit 11 beispielsweise einen Taster umfassen. Mittels der Ladezustandsanzeige kann, beispielsweise im Ansprechen auf eine Betätigung des Tasters, mittels LEDs ein aktueller Ladezustand der Batterieanordnung 10 visuell ausgegeben werden.

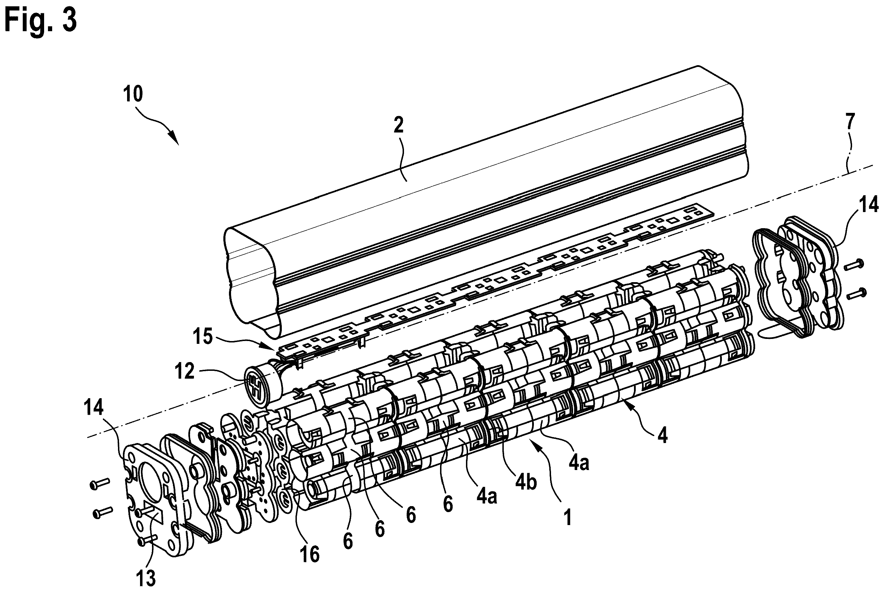

Figur 3 zeigt eine perspektivische Explosionsdarstellung der Batterieanordnung 10 des Beispiels.

Die Batterieanordnung 10 umfasst ferner ein Batteriemanagementsystem 15. Das Batteriemanagementsystem 15 umfasst vorzugsweise einen Mikrocontroller und weist eine Steuereinheit für die Batterieanordnung 10 auf, welche eingerichtet ist zur Steuerung und/oder Regelung des Batteriepacks 1. Das Batteriemanagementsystem 15 kann dabei eine Leiterplatte umfassen.

Das Batteriemanagementsystem 15 ist mit Akkuzellen 6 der Batterieanordnung 10 sowie mit der elektrischen Schnittstelle 12 elektrisch verbunden.

Die Batterieanordnung 10 umfasst dabei eine Vielzahl an, vorzugsweise identisch ausgebildeten, Batteriezellen 6. Insbesondere sind die Batteriezellen 6 als zylindrische Batteriezellen ausgebildet.

In einer zur Längsrichtung 7 orthogonalen Ebene sind jeweils mehrere Batteriezellen 6 radial nebeneinander angeordnet. Im dargestellten Beispiel sind in einer Ebene jeweils acht Batteriezellen radial nebeneinander angeordnet. Diese axial auf gleicher Ebene angeordneten Batteriezellen 6 bilden dabei jeweils einen Zellstack.

Die Batterieanordnung 10 umfasst mehrere Zellstacks, im dargestellten Beispiel insgesamt fünf Zellstacks. Das heißt, es sind in axialer Richtung jeweils sechs Batteriezellen 6 fluchtend zueinander angeordnet.

Die Batterieanordnung 10 umfasst ferner einen Zellhalter 4, welcher eingerichtet ist, um die Batteriezellen 6 definiert relativ zueinander zu halten. Insbesondere weist der Zellhalter 4 dabei eine Vielzahl an Einzelzellaufnahmen auf, welche jeweils eingerichtet sind zur Aufnahme von jeweils genau einer Batteriezelle 6.

Der Zellhalter 4 kann beispielsweise einstückig ausgebildet sein, oder alternativ, wie im dargestellten Beispiel, mehrteilig ausgebildet sein, mit mehreren Halterteilen 4a. Im dargestellten Beispiel weist der Zellhalter 4 insbesondere pro Zellstack jeweils genau einen Halterteil 4a auf.

Axial ist zwischen benachbarten Halterteilen 4a jeweils eine Zwischenplatte 4b angeordnet. Die Zwischenplatten 4b sind beispielsweise aus einem schwer entflammbaren Material gebildet.

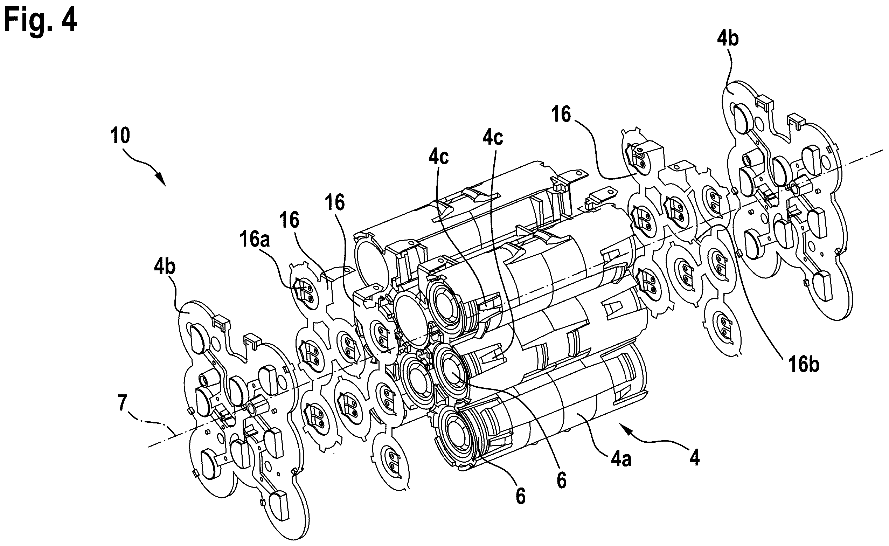

Der Zellhalter 4 weist vorzugsweise pro Batteriezelle 6 jeweils mindestens ein Halteelement 4c auf (vergleiche Figur 4). Die Halteelemente 4c sind eingerichtet zur radialen Fixierung und/oder zum radialen Toleranzausgleich der Batteriezellen 6 in dessen jeweiliger Einzelzellaufnahme des Zellhalters 4.

Weiterhin weist die Batterieanordnung 10, vorzugsweise pro Zellstack, mehrere Zellverbinder 16 auf. Die Zellverbinder 16 sind vorzugsweise als Blechteile ausgebildet und eingerichtet zur elektrischen Verbindung der Batteriezellen 6. Im Detail können die Zellverbinder 16 elektrisch leitend mit Polen der Batteriezellen 6 verbunden werden, vorzugsweise mittels stoffschlüssiger Verbindungen, wie beispielsweise Lötverbindungen oder Schweißverbindungen.

Die Zellverbinder 16 können dabei zudem elektrische Sicherungen aufweisen, welche jeweils als Schmelzsicherung ausgebildet sein können.

Bevorzugt können die Zellverbinder 16 Einzelzell-Sicherungen 16a aufweisen, welche jeweils eine elektrische Schmelzsicherung für jeweils genau eine einzelne Batteriezelle 6 bilden.

Ferner können alternativ oder zusätzlich bevorzugt die Zellverbinder 16 Zellstack-Sicherungen 16b aufweisen, welche insbesondere elektrische Schmelzsicherungen für jeweils einen gesamten Zellstack bilden.

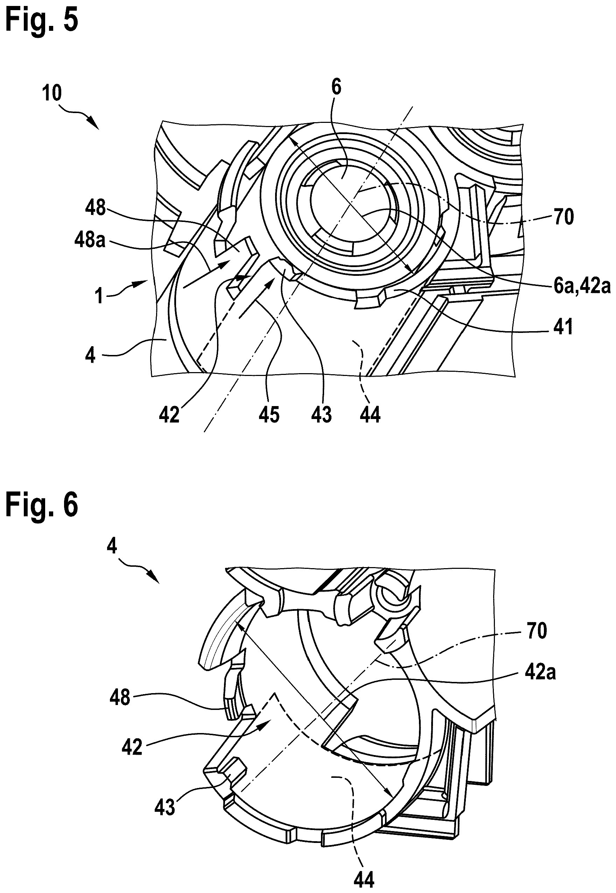

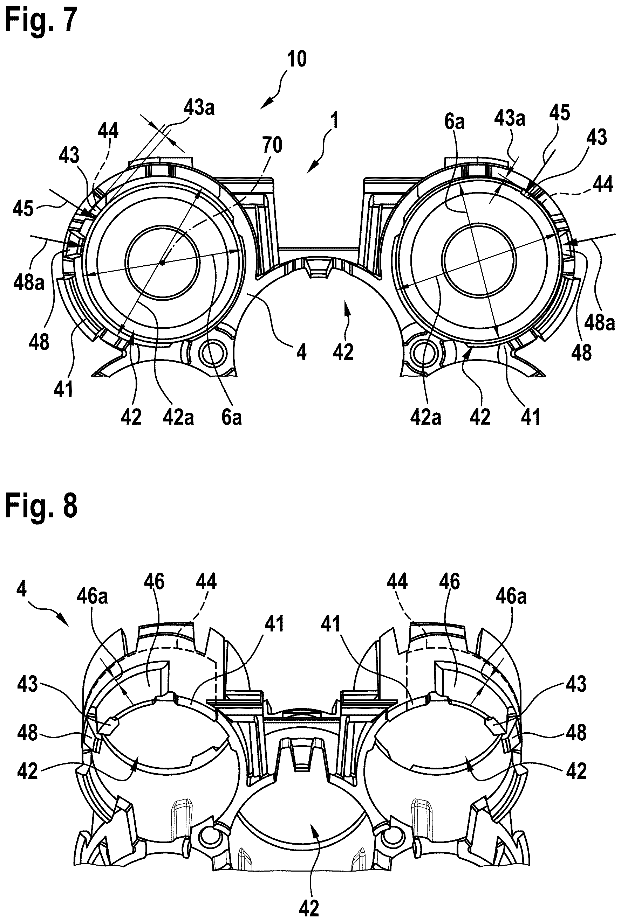

Figur 5 zeigt eine perspektivische Detailansicht einer Batterieanordnung 10 mit einem Zellhalter 4 gemäß einem ersten Ausführungsbeispiel der Erfindung. In den Figuren 6 und 7 sind weitere Details des Zellhalters 4 der Figur 5 dargestellt.

Das erste Ausführungsbeispiel der Figuren 5 bis 7 weist gegenüber der beispielhaften Batterieanordnung 10 der Figuren 1 bis 4 den Vorteil einer verbesserten mechanischen Halterung der Batteriezellen 6 innerhalb des Zellhalters 4 auf. Dies wird erreicht durch ein spezielles Halteelement 43, welches die mechanische Halterung der Batteriezelle 6 verbessert.

Das Halteelement 43 ist dabei an einer hohlzylindrischen Wand 41 des Zellhalters 4 angeordnet.

Die hohlzylindrische Wand 41 definiert dabei durch deren inneren zylindrischen Freiraum eine Zellaufnahme 42, welche von der Wand 41 umschlossen ist. Die Zellaufnahme 42 ist eingerichtet zur Aufnahme der Batteriezelle 6. In Figur 5 ist der Zellhalter 4 mit in der Zellaufnahme 42 angeordneter Batteriezelle 6 gezeigt. Figur 6 zeigt den leeren Zustand des Zellhalters 4 ohne Batteriezelle 6.

Das Halteelement 43 ist dabei an einer Innenseite der Wand 41 angeordnet und ragt nach radial innen in die Zellaufnahme 42 hinein. Im Detail steht das Halteelement 43 dabei derart in die Zellaufnahme 42 radial vor, dass durch das Halteelement 43 lokal der für die Batteriezelle 6 zur Verfügung stehende Platz verkleinert wird.

Das Halteelement 43 ist als integraler Bestandteil der Wand 41 des Zellhalters 4 ausgebildet. Das Halteelement 43 befindet sich dabei im Bereich eines stirnseitigen Endes bezüglich einer Längsrichtung 70 der Zellaufnahme 42 der Wand 41.

Insbesondere ist das Halteelement 43 an einem bestimmten Wandbereich 44 der Wand 41 angeordnet. Der Wandbereich 44 ist in der Figur 5 und 6 gestrichelt angedeutet. Als dieser vorbestimmte Wandbereich 44 wird ein vollständig durchgängiger Bereich der Wand 41 ohne Öffnungen, Aussparungen oder dergleichen angesehen. Das heißt, der gesamte Wandbereich 44 ist aus einem Vollmaterial gebildet.

Das Halteelement 43 weist dabei eine im Wesentlichen quaderförmige Geometrie auf. Im Detail weist das Halteelement 43 in jeder Schnittebene einen rechteckigen Querschnitt auf. Dabei erstreckt sich das Halteelement 43 länglich parallel zur Längsrichtung 70. Somit liegt eine rechteckige Kontaktfläche mit der Batteriezelle 6 vor.

Da Halteelement 43 weist dabei eine Höhe 43a auf, entlang einer radialen Richtung, welche mindestens 1 mm beträgt. Dadurch wird durch das Halteelement 43 zuverlässig bewirkt, dass der Wandbereich 44 nach radial außen elastisch verformt wird, wenn eine Batteriezelle 6 in der Zellaufnahme 42 angeordnet, insbesondere eingeschoben, wird. Das heißt, dadurch, dass das Halteelement 43 in die Zellaufnahme 42 radial vorsteht, wird dieses und damit auch der Wandbereich 44 nach radial außen weggedrängt, wodurch der Wandbereich 44 nach radial außen elastisch verformt wird. Durch diese Verformung wird von Wandbereich 44 und Halteelement 43 eine Haltekraft 45 auf die Batteriezelle 6 ausgeübt.

Dadurch, dass die Höhe 43a mindestens 1 mm beträgt, wird zuverlässig sichergestellt, dass bei üblichen Toleranzen zuverlässig die Verformung und die Haltekraft 45 bewirkt wird. Beispielhaft ist dies anhand der Figur 7 dargestellt. Dabei sind in Figur 7 zwei verschiedene Zellaufnahmen 42 und zwei verschiedene Batteriezellen 6 dargestellt.

In Figur 7 links ist dabei eine große Toleranz, das heißt eine große Differenz zwischen Außenabmessung 42a der Zellaufnahme 42 und Zell-Außenabmessung 6a der Batteriezelle 6 dargestellt, wobei in Figur 7 rechts eine sehr kleine Differenz dargestellt ist. Diese unterschiedlichen Differenzen können beispielsweise durch Toleranzen in der Fertigung von Zellhalter 4 und/oder von Batteriezelle 6 auftreten.

Durch die entsprechende Auslegung des Zellhalters 4 mit dem Halteelement 43 wird dabei in allen Fällen innerhalb der anzunehmenden minimalen und maximalen Toleranzen sichergestellt, dass durch das Einfügen der Batteriezelle 6 in die Zellaufnahme 42 ein Kontakt zwischen Batteriezelle 6 und Halteelement 43 auftritt, derart, dass das Halteelement 43 mit dem Wandbereich 44 der Wand 41 nach radial außen elastisch verformt wird, um damit die Haltekraft 45 auf die Batteriezelle 6 auszuüben.

Somit kann durch den Zellhalter 4 eine besonders zuverlässige und robuste spielfreie Halterung der Batteriezelle 6 ermöglicht werden. Dadurch, dass der gesamte Wandbereich 44 zur kraftschlüssigen Halterung der Batteriezelle 6 mittels der Haltekraft 45 beiträgt, kann die robuste eingespannte Halterung besonders zuverlässig über eine lange Lebensdauer der Batterieanordnung 10 sichergestellt werden.

Zusätzlich umfasst der Zellhalter 4 ein zweites Federelement 48, welches eingerichtet ist, um eine zweite Federkraft 48a auf die Batteriezelle 6 auszuüben, wenn die Batteriezelle 6 in der Zellaufnahme 42 angeordnet ist. Die zweite Federkraft 48a ist dabei radial ausgerichtet. Das zweite Federelement 48 ist gemeinsam mit der Wand 41 als ein einstückiges Bauteil ausgebildet und erstreckt sich als Lasche entlang der axialen Richtung. Insbesondere kann das zweite Federelement 48 durch axiale Freischnitte, das heißt Durchgangsöffnungen, beidseitig neben dem Federelement 48 ausgebildet sein, um eine elastische Nachgiebigkeit und Vorspannung in radialer Richtung bereitstellen zu können.

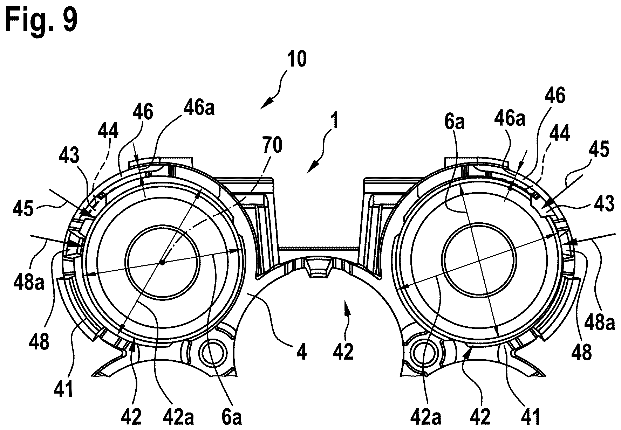

Figur 8 zeigt eine perspektivische Detailansicht eines Zellhalters 4 gemäß einem zweiten Ausführungsbeispiel der Erfindung. In Figur 9 ist eine alternative Ansicht des Zellhalters 4 der Figur 8 dargestellt. Das zweite Ausführungsbeispiel entspricht im Wesentlichen dem ersten Ausführungsbeispiel der Figuren 5 bis 7, mit dem Unterschied, dass im Bereich des Halteelements 43 jeweils zusätzlich eine radiale Ausnehmung 46 an der radial äußeren Seite der Wand 41 des Zellhalters 4 vorgesehen ist.

Im Detail ist die Ausnehmung 46 in Form einer Vertiefung der Außenseite der Wand 41 des Zellhalters 4 ausgebildet. Die Ausnehmung 46 erstreckt sich dabei in axialer Richtung und in Umfangsrichtung insbesondere im Wesentlichen über den gesamten Teil der Wand 41, der bei eingeschobener Batteriezelle 6 radial nach außen verformt wird. Insbesondere erstreckt sich die Ausnehmung 46 über mindestens 20 Prozent des gesamten Umfangs der Wand 41. Vorzugsweise erstreckt sich die Ausnehmung 46 zudem über mindestens 10 Prozent der axialen Länge der Wand 41.

Bevorzugt weist die radiale Ausnehmung 46 in radialer Richtung eine Tiefe 46a auf, welche mindestens 30 Prozent, bevorzugt mindestens 50 Prozent, der Dicke der Wand 41, insbesondere in einem Bereich unmittelbar neben dem Halteelement 43, entspricht.

Die radiale Ausnehmung 46 bietet dabei den Vorteil, dass Platz zur Verformung für die Wand 41 mit dem Halteelement 43 bereitgestellt werden kann. Das heißt, das durch das Einschieben der Batteriezelle 6 bewirkte radiale nach außen Verformen von Halteelement 3 und Wand 41 kann innerhalb des durch die Ausnehmung 46 zur Verfügung stehenden freien Bauraums erfolgen. Somit kann das umliegende Gehäuse 2 unmodifiziert, insbesondere im Vergleich zu einem Zellhalter ohne solche Ausnehmung 46, verwendet werden. Das heißt, es muss beispielsweise ausgehend von dem in den Figuren 1 bis 4 dargestellten Beispiel kein zusätzlicher Spalt oder Freiraum zwischen Zellhalter 4 und Gehäuse 2 bereitgestellt werden durch Modifikation des Gehäuses 2. Somit kann eine besonders einfache und kostengünstige sowie platzsparende Batterieanordnung 10 bereitgestellt werden. Ferner kann durch die Ausnehmung 4, insbesondere durch entsprechende Auslegung deren Tiefe 46a, die Elastizität der Wand 41 und damit die Haltekraft 45 besonders gezielt bereitgestellt werden.

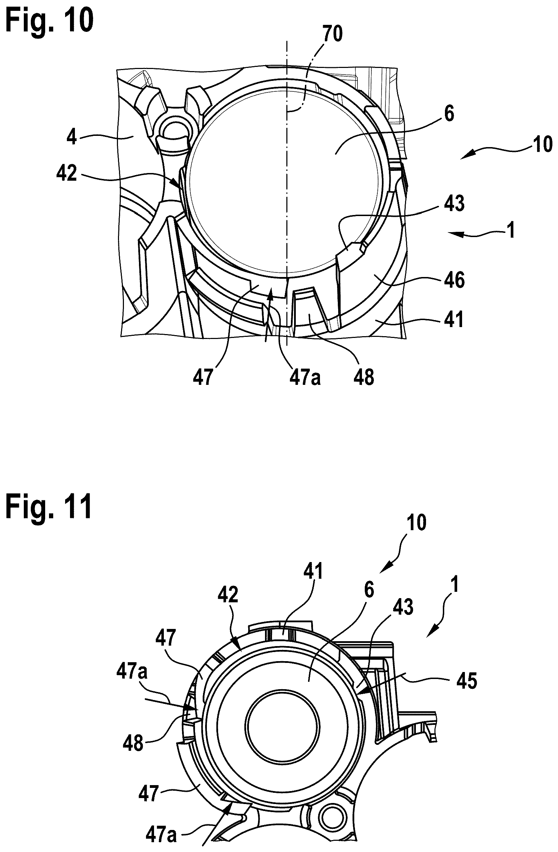

Figur 10 zeigt eine perspektivische Detailansicht einer Batterieanordnung 10 mit einem Zellhalter 4 gemäß einem dritten Ausführungsbeispiel der Erfindung. Das dritte Ausführungsbeispiel entspricht im Wesentlichen dem zweiten Ausführungsbeispiel der Figuren 8 und 9 mit dem Unterschied eines zusätzlichen weiteren ersten Federelements 47.

Das erste Federelement 47 ist eingerichtet, um eine erste Federkraft 47a auf die Batteriezelle 6 auszuüben, wenn die Batteriezelle 6 in der Zellaufnahme 42 des Zellhalters 4 aufgenommen ist.

Das erste Federelement 47 ist dabei gemeinsam mit der Wand 41 als ein einstückiges Bauteil ausgebildet. Dabei erstreckt sich das erste Federelement 47 im Wesentlichen schneckenförmig entlang einer Umfangsrichtung. Insbesondere kann das erste Federelement 47 dabei durch einen in Umfangsrichtung verlaufenden Spalt in der Wand 41 ausgebildet sein.

Das erste Federelement 47 bildet dabei ein weiteres Element des Zellhalters 4, das eine Halterung der Batteriezelle 6 bewirkt bzw. unterstützt. Insbesondere sind dabei das erste Federelement 47 und das Halteelement 43 an unterschiedlichen Umfangspositionen der Zellaufnahme 42 angeordnet. Dadurch können Haltekräfte auf die Batteriezelle 6 von unterschiedlichen Richtungen aufgebracht werden. Damit kann beispielsweise auch bei Versagen von einem der Federelemente 47, 48 oder des Halteelements 43 weiterhin eine zuverlässige spielfreie Halterung der Batteriezelle 6 im Zellhalter 4 sichergestellt werden.

Figur 11 zeigt eine Detailansicht einer Batterieanordnung 10 mit einem Zellhalter 4 gemäß einem vierten Ausführungsbeispiel der Erfindung. Das vierte Ausführungsbeispiel entspricht im Wesentlichen dem dritten Ausführungsbeispiel der Figur 10, mit dem Unterschied, dass der Zellhalter 4 zwei erste Federelemente 47 aufweist.

Die beiden ersten Federelemente 47 sind an unterschiedlichen Umfangspositionen des Zellhalters 4 angeordnet, derart, dass die entsprechenden ersten Federkräfte 47a an unterschiedlichen Umfangspositionen auf die Batteriezelle 6 ausgeübt werden. Damit kann eine besonders zuverlässige Halterung der Batteriezelle 6 ermöglicht werden, da die Federkräfte 47a und die Haltekraft 45 aus mehreren verschiedenen Richtungen auf die Batteriezelle 6 ausgeübt werden können.

Die beiden ersten Federelemente 47 sind dabei zudem unterschiedlich ausgebildet. Im Detail können die beiden Federelemente 47 entlang der Umfangsrichtung unterschiedliche Längen aufweisen. Dadurch können verschiedene Federkräfte 47a auf die Batteriezelle 6 ausgeübt werden, wodurch beispielsweise Vibrationen und Schwingungen unterschiedlicher Frequenzen besonders effektiv und zuverlässig gedämpft oder ausgeglichen werden können.

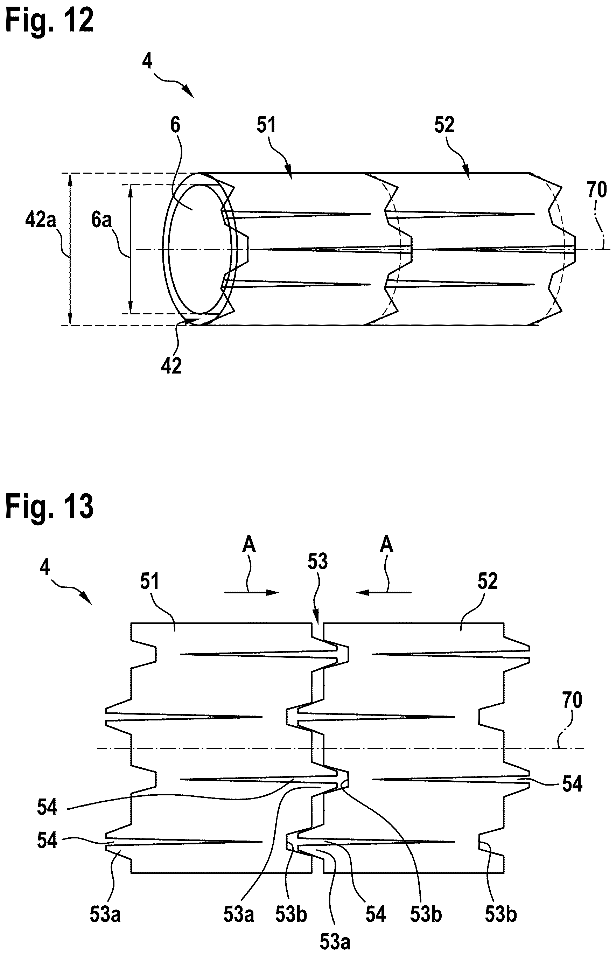

Figur 12 zeigt eine vereinfachte schematische Ansicht eines Zellhalters 4 gemäß einem fünften Ausführungsbeispiel. In Figur 13 bis Figur 15 sind stark vereinfachte schematische Detailansichten des Zellhalters 4 der Figur 12 dargestellt.

Der Zellhalter 4 des fünften Ausführungsbeispiels zeichnet sich gegenüber dem Zellhalter 4 der Batterieanordnung 10 des Beispiels der Figuren 1 bis 4 dadurch aus, dass dieser eine verbesserte flexible Halterung der Batteriezellen 6 erlaubt. Im Detail weist der Zellhalter 4 des fünften Ausführungsbeispiels den Vorteil auf, dass ein besonders hoher Toleranzausgleich gewährleistet werden kann, und zudem die Batteriezelle 6 mechanisch besonders zuverlässig fest am Zellhalter 4 fixiert werden kann. Dadurch wird zudem eine erhöhte Robustheit der Batterieanordnung 10 und eine erhöhte Steifigkeit des Batteriepacks 1 bereitgestellt. Zudem können insbesondere in radialer Richtung Einsparungen des erforderlichen Bauraums ermöglicht werden. Ferner kann ein geringerer Materialeinsatz des Zellhalters 4 und ein geringeres Gewicht ermöglicht werden. Durch besonders gleichmäßiges Einspannen der Batteriezelle 6 um dessen Umfang verteilt, kann zudem die Wahrscheinlichkeit des Auftretens von Aufreißen oder Aufplatzen von Seitenwänden der Batteriezellen 6, beispielsweise im Falle eines zellinternen Defekts, reduziert werden.

Dies wird erreicht durch einen Zellhalter 4, welcher entlang der Längsrichtung 70 zumindest zweiteilig ausgebildet ist, mit einem ersten Zellhalterteil 51 und einem zweiten Zellhalterteil 52. Bevorzugt können die beiden Zellhalterteile 51, 52 zumindest im Wesentlichen identisch ausgebildet sein, wie im dargestellten fünften Ausführungsbeispiel. Alternativ bevorzugt können die beiden Zellhalterteile 51, 52 unterschiedlich ausgebildet sein.

Im fünften Ausführungsbeispiel ist der Zellhalter 4 derart ausgebildet, dass durch axiales Aneinanderschieben der beiden Zellhalterteile 51, 52, wie in Figur 13 mittels der Pfeile A gekennzeichnet, durch eine Eingriffsstruktur 53 des Zellhalters 4 automatisch selbsttätig eine radiale Verspannung des Zellhalters 4 mit der Batteriezelle 6 erfolgt. Diese radiale Verspannung erfolgt durch Verkleinerung des Innendurchmessers der jeweiligen Zellhalterteile 51, 52, das heißt, durch Verkleinerung der Außenabmessung 42a der Zellaufnahme 42 (vergleiche Figur 12).

Um die Durchmesserverkleinerung zu ermöglichen, weist jedes Zellhalterteil 51, 52 entlang der Umfangsrichtung mehrere axiale Schlitze 54 auf. Pro Zellhalterteil 51, 52 sind die Schlitze 54 jeweils gleichmäßig um den Umfang verteilt angeordnet.

Dabei sind entlang der Umfangsrichtung abwechselnd jeweils ein Schlitz 54 ausgehend von einer der beiden axialen Stirnseiten des jeweiligen Zellhalterteils 51, 52 ausgebildet.

Jeder Schlitz 54 erstreckt sich dabei über mindestens 30 Prozent, vorzugsweise maximal 80 Prozent, einer axialen Länge des jeweiligen Zellhalterteils 51. Insbesondere wird dadurch entlang der Umfangsrichtung eine im Wesentlichen mäanderförmige Struktur jedes Zellhalterteils 51, 52 bereitgestellt.

Pro Schlitz 54 weist jeder Zellhalterteil 51, 52 jeweils symmetrisch zum entsprechenden Schlitz 54 ein vorstehendes Eingriffselement 53a auf. Jedes vorstehende Eingriffselement 53a steht dabei in axialer Richtung über die Stirnseite des Zellhalterteils 51, 52 vor.

Jedes vorstehende Eingriffselement 53a weist eine ausgehend vom Grundkörper des Zellhalterteils 51, 52 sich verjüngende Geometrie auf. Insbesondere weist jedes vorstehende Eingriffselement 53a eine V-förmige, bevorzugt trapezförmige, Geometrie auf.

Ferner weist jeder Zellhalterteil 51, 52 pro vorstehendem Eingriffselement 53a jeweils eine am entsprechenden gegenüberliegenden Zellhalterteil 51, 52 ausgebildete Aussparung 53b auf. Jede Aussparung 53b erstreckt sich dabei ausgehend von der axialen Stirnseite in den Grundbereich des Zellhalterteils 51, 52 in axialer Richtung hinein. Jede Aussparung 53b weist eine sich in axialer Richtung zur Mitte des Zellhalters 51, 52 verjüngende Geometrie auf. Insbesondere weist jede Aussparung 53b eine V-förmige, vorzugsweise trapezförmige, Geometrie auf.

Eine Breite jeder Aussparung 53b, insbesondere bezüglich der Umfangsrichtung, ist dabei kleiner als eine Breite des entsprechenden vorstehenden Eingriffselements 53a.

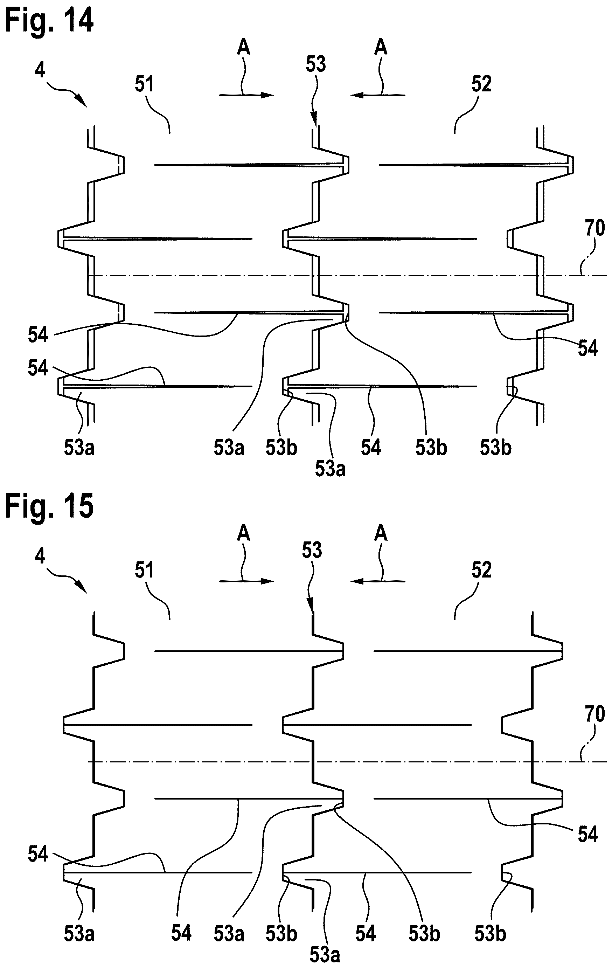

Die Eingriffsstruktur 53 des Zellhalters 4 ist dabei derart ausgebildet, dass das axiale Aneinanderfügen der Zellhalterteile 51, 52 durch den Eingriff der vorstehenden Eingriffselemente 53a in die Aussparungen 53b ein Verjüngen des Schlitzes 54 bewirkt, wie anhand der Figuren 13 bis 15 dargestellt. Hierbei werden die beiden Zellhalterteile 51, 52 soweit aneinandergefügt, bis die Stirnseiten aneinander liegen. Im dargestellten fünften Ausführungsbeispiel wird dabei der Schlitz 54 im Wesentlichen vollständig kompensiert (vergleiche Figur 15). Alternativ bevorzugt kann auch ein im vollständig gefügten Zustand verbleibender geringfügig geöffneter Schlitz 54 verbleiben.

Durch das Aneinanderfügen der Zellhalterteile 51, 52 und das damit einhergehende Verkleinern der Schlitze 54 wird bewirkt, dass sich der Innendurchmesser des Zellhalters 4 und damit die Außenabmessung 42a der Zellaufnahme 42 verkleinert. Hierdurch wird die Batteriezelle 6 vollumfänglich durch den Zellhalter 4 eingeklemmt und damit mechanisch fest fixiert. Dadurch kann eine auf die Außenfläche der Batteriezelle 6 besonders gleichmäßig verteilte mechanische Halterung erfolgen.

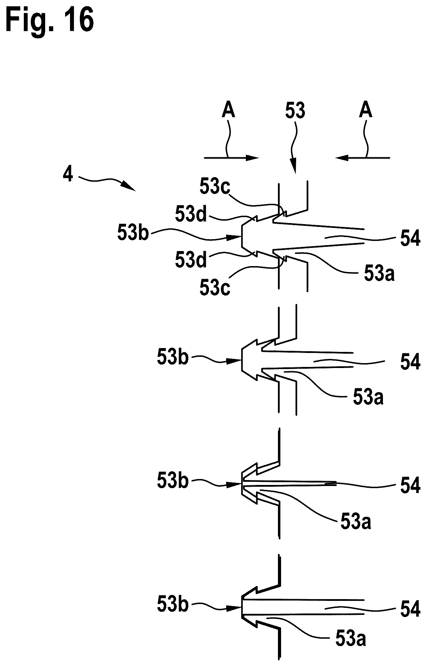

Figur 16 zeigt eine stark vereinfachte schematische Detailansicht eines Zellhalters 4 gemäß einem sechsten Ausführungsbeispiel. Das sechste Ausführungsbeispiel entspricht im Wesentlichen dem fünften Ausführungsbeispiel der Figuren 12 bis 15, mit dem Unterschied einer alternativen Ausgestaltung der Eingriffsstruktur 53. Im sechsten Ausführungsbeispiel weist die Eingriffsstruktur 53 zusätzlich einen Rastmechanismus auf, welcher ein Einrasten der Eingriffsstruktur 53 erlaubt.

Im Detail weisen die vorstehenden Eingriffselemente 53a beidseitig jeweils einen Rasthaken 53c auf. Der Rasthaken 53c kann im axial vollständig zusammengeschobenen Zustand der Zellhalterteile 51, 52 (in Figur 16 ganz unten) in Rastaussparungen 53d der Aussparungen 53b eingreifen.

Durch Eingreifen der Rasthaken 53c in die Rastaussparungen 53d wird ein axiales Lösen der Zellhalterteile 51, 52 voneinander verhindert, wodurch beispielsweise vermieden werden kann, dass diese in axialer Richtung mittels einer Kraft oder Einspannung oder dergleichen aneinandergehalten werden müssen. Somit kann eine besonders einfache und zuverlässig haltende Einspannung der Batteriezellen 6 ermöglicht werden.

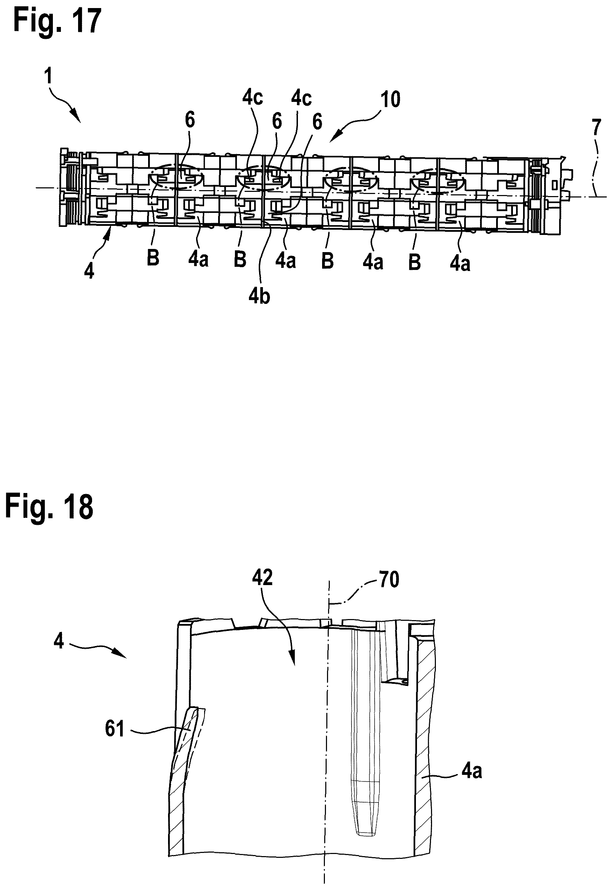

Figur 17 zeigt eine perspektivische Ansicht eines Batteriepacks 1 einer Batterieanordnung 10 mit einem Zellhalter 4 gemäß einem siebten Ausführungsbeispiel. In Figur 18 ist eine Detail-Schnittansicht des Zellhalters 4 des siebten Ausführungsbeispiels dargestellt.

Im Unterschied zum Beispiel der Figuren 1 bis 4 zeichnet sich das siebte Ausführungsbeispiel durch eine verbesserte Halterung der Batteriezellen 6 innerhalb des Zellhalters 4 aus.

Der Zellhalter 4 des siebten Ausführungsbeispiels weist zusätzlich zu den Halteelementen 4c (vergleiche Figur 4) pro Batteriezelle 6 bzw. pro Zellaufnahme 42 jeweils ein zusätzliches zweites Halteelement 61 auf (vergleiche Figur 18). Jedes zweite Halteelement 61 ist dabei an der entsprechenden Zellaufnahme 42 an einer unterschiedlichen Umfangsposition sowie zusätzlich an einer unterschiedlichen Axialposition angeordnet.

Im Detail sind die Halteelemente 4c im Wesentlichen an der axialen Stirnseite jeder Zellaufnahme 42 angeordnet. Die zweiten Halteelemente 61 sind dabei insbesondere zwischen der axialen Mitte der Zellaufnahme 42 und der Stirnseite angeordnet. Bevorzugt ist jedes zweite Halteelement 61 in einem mittigen Drittel der axialen Länge der Zellaufnahme 42 angeordnet.

Dadurch wird eine zusätzliche Haltekraft radial auf die Batteriezelle 6 ausgeübt, wodurch eine zuverlässigere und stabilere Halterung der Batteriezellen 6 ermöglicht werden kann.

Bevorzugt sind erstes Halteelement 4c und zweites Halteelement 61 jeder Zellaufnahme 42 unterschiedlich ausgelegt. Insbesondere ist eines der Halteelemente 4c, 61 für eine minimale Zelldurchmessertoleranz und das andere Halteelement 4c, 61 für die maximale Zelldurchmessertoleranz ausgelegt. Dadurch können besonders zuverlässig innerhalb des gesamten Batteriepacks 1 Batteriezellen 6 mit unterschiedlichen Toleranzen gehalten werden.

Vorzugsweise ist das zweite Halteelement 61, wie in Figur 18 zu erkennen, als nach radial innen vorstehendes Federelement ausgebildet, welches elastisch nachgiebig ausgebildet ist. Durch Einfügen der Batteriezelle 6 in die Zeilaufnahme 42 wird das zweite Halteelement 61 nach radial außen verformt, wodurch eine Federkraft nach radial innen auf die Batteriezelle 6 ausgeübt wird.

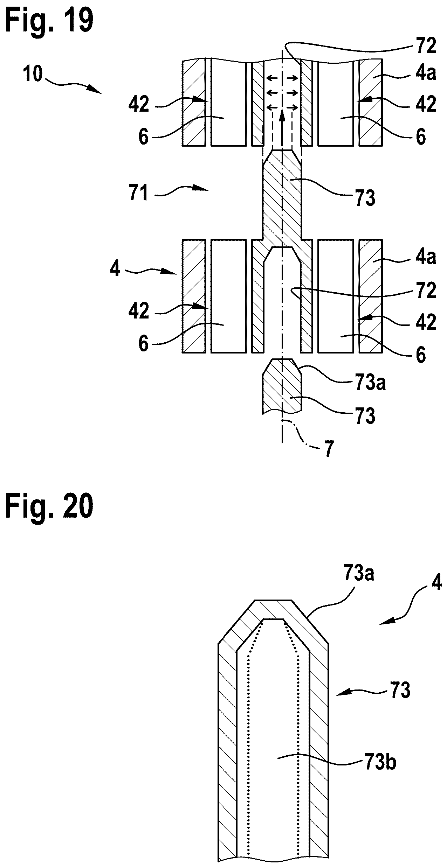

Figur 19 zeigt eine stark vereinfachte schematische Ansicht eines Details eines Zellhalters 4 gemäß einem achten Ausführungsbeispiel. Im Unterschied zum Beispiel der Figuren 1 bis 4 weist das achte Ausführungsbeispiel den Vorteil einer verbesserten Einspannung der Batteriezellen 6 im Zellhalter 4 auf. Dies wird erreicht durch eine Spannstruktur 71 zwischen den verschiedenen Halteteilen 4a des Zellhalters 4.

Im Detail weist jeder Halteteil 4a zwischen radial benachbarten Batteriezellen 6 jeweils ein erstes Spannelement 72 auf, welches als sich im Wesentlichen axial zwischen den beiden Batteriezellen 6 erstreckende, einseitig offene Ausnehmung ausgebildet ist. Insbesondere kann das erste Spannelement 72 somit im Wesentlichen als Sacklochbohrung ausgebildet sein.

Zusätzlich weist jedes Halteteil 4a ein zweites Spannelement 73 auf, welches in axialer Richtung fluchtend mit dem ersten Spannelement 72 ausgebildet ist und axial von dem Halteteil 4a vorstehend ausgebildet ist. Insbesondere ist jedes zweite Spannelement 73 als vorstehender Dorn, vorzugsweise mit Einführphase 73a, ausgebildet.

Die Spannstruktur 71 ist dabei derart ausgebildet, dass beim Zusammenbau des Zellhalters 4, durch axiales Aneinanderfügen der Halteteile 4a, jedes zweite Spannelement 73 in jeweils ein erstes Spannelement 72 axial eingefügt wird.

Zwischen erstem Spannelement 72 und zweitem Spannelement 73 liegt dabei ein Übermaß vor. Dadurch werden die das zweite Spannelement 72 umgebenden Wände des Halteteils 4a radial aufgeweitet und damit gegen die radial danebenliegenden Batteriezellen 6 gedrückt. Somit werden durch das axiale Fügen der Halteteile 4a die Batteriezellen 6 durch die Verformung der Wände des Zellhalters 4 radial eingespannt und somit mechanisch festgehalten. Somit kann insbesondere über einen großen Teil der axialen Länge der Batteriezellen 6 eine zuverlässige und robuste Fixierung der Batteriezellen 6 erfolgen.

Figur 20 zeigt eine vereinfachte schematische Ansicht eines Details eines Zellhalters 4 gemäß einem neunten Ausführungsbeispiel. Das neunte Ausführungsbeispiel entspricht im Wesentlichen dem achten Ausführungsbeispiel der Figur 19, mit dem Unterschied einer alternativen Ausgestaltung der zweiten Spannelemente 73. Im neunten Ausführungsbeispiel der Figur 20 ist jedes zweite Spannelement 73 innen hohl ausgebildet. Das heißt, jedes zweite Spannelement 73 weist eine Aussparung 73b in dessen Innerem auf.

Dadurch weist jedes zweite Spannelement 73 eine erhöhte Flexibilität auf. Das heißt, das zweite Spannelement 73 kann beispielsweise dünnwandiger ausgebildet sein, so dass die Wand geringfügig radial nachgeben kann, wie durch die gepunktete Linie in Figur 20 angedeutet. Vorzugsweise kann eine Wandstärke des zweiten Halteelements 73 dabei genau ausgelegt werden, um vorbestimmte radiale Spannkräfte auf die Batteriezellen 6 ausüben zu können.

Alternativ oder zusätzlich bevorzugt können im zweiten Spannelement 73 alternative, die Struktur schwächende, Elemente vorgesehen sein, um die gewünschten mechanischen Eigenschaften der Verspannung bereitzustellen, wie beispielsweise eine definierte Schlitzung des zweiten Halteelements 73.

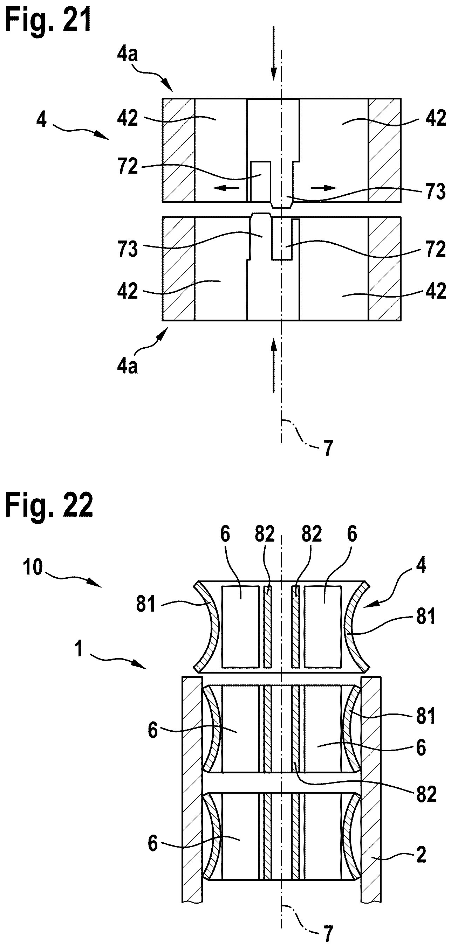

Figur 21 zeigt eine stark vereinfachte schematische Detailansicht eines Zellhalters 4 gemäß zehnten Ausführungsbeispiel. Das zehnte Ausführungsbeispiel entspricht im Wesentlichen dem achten Ausführungsbeispiel der Figur 19, mit dem Unterschied, dass an jedem Halteteil 4a beidseitig und in beide Richtungen erste Spannelemente 72 und zweite Spannelemente 73 vorgesehen sind.

Insbesondere sind dabei jeweils ein erstes Spannelement 72 und ein zweites Spannelement 73 radial nebeneinander an jedem Halteteil 4 angeordnet. Mit entsprechend gegenüberliegenden ersten und zweiten Spannelementen 72 und 73 eines weiteren Halteteils 4a können diese dabei ineinandergreifen und die radiale Verspannung bereitstellen, zum Einspannen der Batteriezellen 6 in radialer Richtung.

Figur 22 zeigt eine stark vereinfachte schematische Ansicht eines Batteriepacks mit einem Zellhalter gemäß einem elften Ausführungsbeispiel. Das elfte Ausführungsbeispiel weist im Unterschied zum Beispiel der Figuren 1 bis 4 den Vorteil auf, dass ein Toleranzausgleich und eine besonders zuverlässige Halterung der Batteriezellen 6 unbeweglich innerhalb des Batteriepacks 1 ermöglicht werden.

Dies wird erreicht durch einen Zellhalter 4, welcher Vorspannelemente 81 aufweist, die beim Einschieben des Batteriepacks 1 in das Gehäuse 2 eine Vorspannung auf die Batteriezelle 6 ausüben, um diese unbeweglich im Zellhalter 4 einzuspannen.

Insbesondere weist der Zellhalter 4 dabei pro Batteriezelle 6 jeweils genau ein Vorspannelement 81 auf. Das Vorspannelement 81 ist dabei einseitig radial neben der entsprechenden Batteriezelle 6 angeordnet.

Im gezeigten Ausführungsbeispiel der Figur 22 sind die Vorspannelemente 81 als konvex zur Batteriezelle 6 hin gekrümmte Teilbereiche des Zellhalters 4 ausgebildet.

Auf einer der Vorspannelement 81 gegenüberliegenden Seite der Batteriezelle 6 kann der Zellhalter 4 gerade Wände 82 aufweisen.

Die Vorspannelemente 81 sind dabei derart ausgelegt, dass diese einen gesamten Toleranzbereich der Batteriezellen 6 abdecken können. Insbesondere erfolgt dabei sowohl bei minimaler, als auch bei maximaler Toleranz jeweils eine gewisse elastische Verformung der Vorspannelemente 81 beim Einschieben des Batteriepacks 1 in das Gehäuse.

Dadurch wird beim Einschieben des Batteriepacks 1 in das Gehäuse 2 eine radial wirkende Klemmkraft auf jede Batteriezelle 6 ausgeübt. Damit kann neben dem Toleranzausgleich eine jederzeit zuverlässige unbewegliche Fixierung der Batteriezellen 6 im Zellhalter 4 bereitgestellt werden. Zudem kann durch beispielsweise die verbleibende Verformbarkeit der Vorspannelemente 81 eine zusätzliche Vibrationsdämpfung ermöglicht werden, wodurch eine besonders zuverlässige und robuste Halterung der Batteriezellen 6 ermöglicht werden kann.

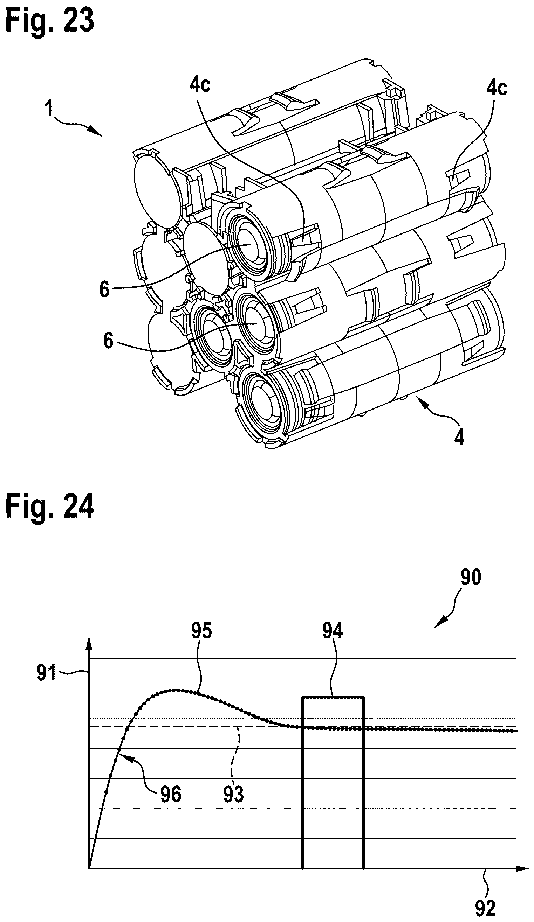

Figur 23 zeigt eine perspektivische Ansicht eines Details einer Batterieanordnung 10 mit einem Zellhalter 4 gemäß einem zwölften Ausführungsbeispiel. In Figur 24 ist ein Spannungs-Dehnungs-Diagramm 90 der Halteelemente 4c des Zellhalters 4 des zwölften Ausführungsbeispiels dargestellt. Das zwölfte Ausführungsbeispiel weist gegenüber dem Beispiel der Figuren 1 bis 4 den Vorteil auf, dass eine besonders zuverlässige konstante Haltekraft in allen Betriebszuständen und über die gesamte Lebensdauer der Batterieanordnung 10 bereitgestellt werden kann.

Dies wird erreicht dadurch, dass die Halteelemente 4c des Zellhalters 4 speziell geometrisch und materialspezifisch derart ausgelegt sind, dass diese im vollständig montierten Zustand der Batterieanordnung 10 eine konstante Spannung auf die Batteriezellen 6 ausüben.

Dies wird dadurch erreicht, dass zumindest die Halteelemente 4c, insbesondere der gesamte Zellhalter 4, aus einem duktilen Material, insbesondere einem duktilen Kunststoff, bevorzugt aus Polycarbonat, gebildet ist.

Zudem sind die Halteelemente 4c bevorzugt derart ausgebildet, dass diese durch das Einschieben der Batteriezellen 6 in den Zellhalter 4 plastisch verformt werden. Das heißt, die Halteelemente 4c werden durch die Batteriezellen 6 beim initialen Montieren so weit umgeformt, dass eine plastische Verformung zumindest in Teilbereichen der Halteelemente 4c stattfindet. Dies wird anhand der Figur 24 verdeutlicht.

Figur 24 zeigt dabei eine Spannung 91 eines beispielhaften Halteelements 4c in Abhängigkeit einer Dehnung 92. Die Kurve 95 bildet dabei den Spannungs-Dehnungs-Verlauf. Die gestrichelte Linie 93 zeigt ein konstantes Spannungsniveau.

Die Halteelemente 4c werden dabei derart ausgelegt, dass deren Spannungs-Dehnungsniveau nach der initialen Montage, das heißt nach dem Anordnen der Batteriezellen 6 innerhalb des Zellhalters 4, innerhalb des markierten Bereichs 94 liegen. Dieser Bereich 94 liegt deutlich nach dem Bereich 96 der elastischen Verformung. Dadurch wird, entsprechend Diagramm 90, ein konstant bleibendes Spannungsniveau in dem Halteelement 4c bereitgestellt, auch bei steigender Dehnung. Das heißt, wenn beispielsweise eine größere Batteriezelle 6 in den Zellhalter 4 eingefügt wird, steigt die Dehnung 92 im Halteelement 4c, wobei die Spannung 91 im Wesentlichen gleich bleibt. Dadurch ist die Haltekraft an der Batteriezelle 6 auch bei unterschiedlichen Zelldurchmessern und über die Zeit stets im Wesentlichen konstant.

Bevorzugt kann die zu erzielende Haltekraft, welche das Halteelement 4c auf die Batteriezelle 6 ausübt, durch gezielte Auslegung der Geometrie des Halteelements 4c, wie beispielsweise mittels Breite, Dicke und Länge des Federarms des Halteelements 4c ausgelegt werden. Bevorzugt kann zusätzlich durch Beimischung weiterer Materialien, wie beispielsweise Glasfasern, eine Steifigkeit des Halteelements 4c gezielt beeinflusst werden, um die gewünschte Haltekraft bereitzustellen.

Zur Bereitstellung einer zuverlässigen Haltekraft auch nach längerer Lebensdauer, kann zusätzlich ein Kriechmodell des Halteelements 4c berücksichtigt werden bei der Auslegung des Halteelements 4c. Insbesondere bei einer Verwendung von Polycarbonat oder einer Mischung mit Polycarbonat kann dabei der Vorteil einer besonders geringen Kriechneigung bereitgestellt werden.

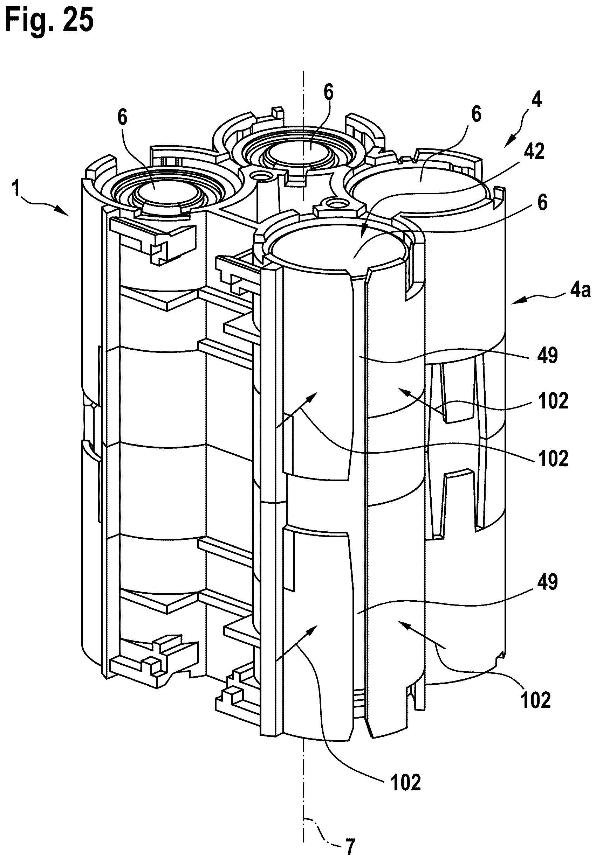

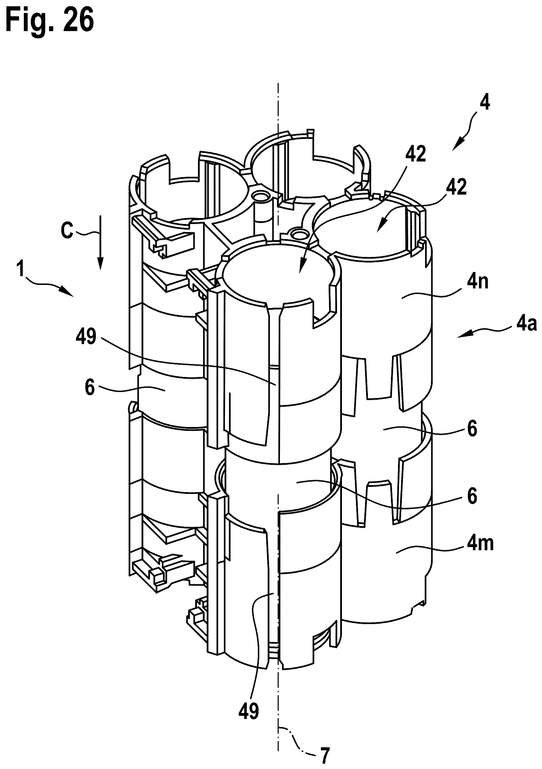

Figur 25 zeigt eine perspektivische Ansicht eines Details eines Zellhalters 4 gemäß einem dreizehnten Ausführungsbeispiel. In Figur 26 ist ein Batteriepack 1 mit dem Zellhalter der Figur 25 bei der Montage dargestellt.

Im Unterschied zum Beispiel der Figuren 1 bis 4 weist der Zellhalter 4 des dreizehnten Ausführungsbeispiels den Vorteil einer besonders gleichmäßigen und robusten Fixierung der Batteriezellen 6 auf. Dabei können eine unbewegliche Halterung und ein zuverlässiger Toleranzausgleich ermöglicht werden.

Dies wird erreicht durch einen Zellhalter, welcher an jedem Halteteil 4a jeweils einen Längsschlitz 49 aufweist, der den Zellhalter 4, ausgehend von der Zellaufnahme 42, in radialer Richtung vollständig und über die gesamte axiale Länge der Zellaufnahme 42 durchdringt. Das heißt, der Zellhalter 4 ist an jeder Batteriezelle 6 über die gesamte axiale Länge der Zellaufnahme 42 geschlitzt ausgebildet.

Im Detail ist der Zellhalter 4 dabei so ausgebildet, dass durch das Einfügen der Batteriezelle 6 der Zellhalter 4 radial aufgeweitet und elastisch verformt wird, so dass der Zellhalter 4 eine Haltekraft 102 in radialer Richtung auf die Batteriezelle 6 ausübt. Insbesondere ist somit ein Übermaß zwischen der Batteriezelle 6 und dem unverformten Zellhalter 4 ausgebildet.

Damit kann ermöglicht werden, dass der Zellhalter 4 zumindest über einen Teil der axialen Länge und zumindest über einen Teil des Umfangs der Batteriezelle 6 besonders gleichmäßig und jederzeit die Haltekräfte 102 in radialer Richtung auf die Batteriezelle 6 ausübt, um diese robust und spielfrei zu fixieren.

In Figur 26 ist ein Schritt während der Montage der Batterieanordnung 10 mit dem Zellhalter 4 des dreizehnten Ausführungsbeispiels dargestellt. Wie in Figur 26 zu erkennen, ist der Halteteil 4a des Zellhalters 4 dabei aus zwei separaten Teilen 4m, 4n gebildet, welche in axialer Richtung aneinandergefügt werden können. Bei der Montage werden dabei zunächst die Batteriezellen 6 in den unteren Teil 4m des Halteteils 4a eingeschoben. Anschließend wird der obere Teil 4n axial, wie durch den Pfeil C gekennzeichnet, auf die Batteriezellen 6 aufgeschoben.

Bevorzugt sind die Teile 4m, 4n des Halteteils 4a dabei im Inneren an den entsprechenden Teilbereichen der Zellaufnahme 42 verjüngt ausgebildet, besonders bevorzugt konisch verjüngt. Im Detail erfolgt die Verjüngung dabei ausgehend von der Mitte in Richtung jeweils zu den axialen Stirnseiten der Batteriezellen 6. Dadurch kann das Zusammenschieben der Teile 4m,4n und der Batteriezellen 6 auf besonders einfache leichtgängige Weise erfolgen, wobei durch die Verjüngung und den Längsschlitz 49 zuverlässig die Aufweitung und damit Vorspannung bereitgestellt wird.

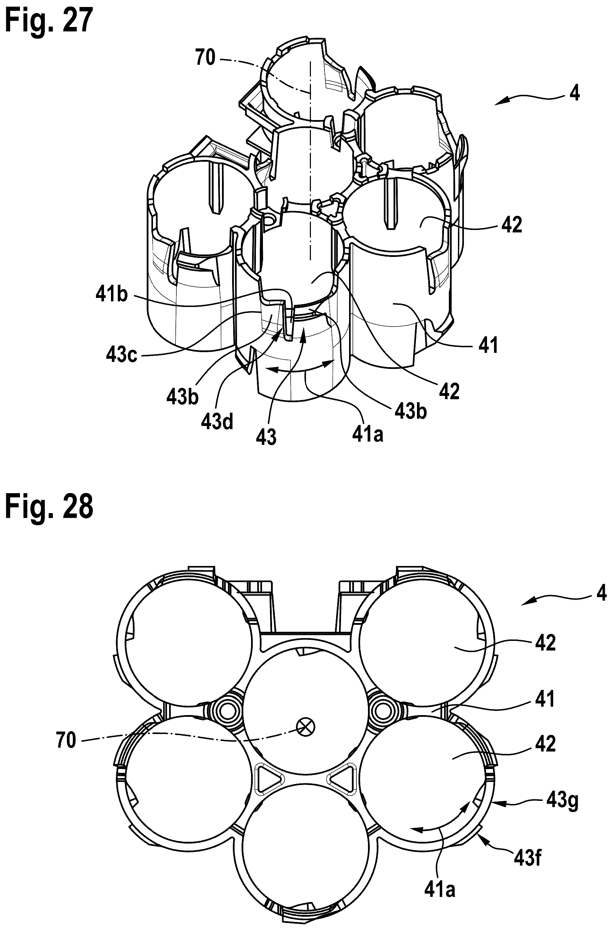

Figur 27 zeigt eine perspektivische Ansicht eines Zellhalters 4 gemäß einem vierzehnten Ausführungsbeispiel der Erfindung. In den Figuren 28 bis 30 sind weitere Details des Zellhalters 4 der Figur 27 dargestellt.

Das vierte Ausführungsbeispiel entspricht im Wesentlichen dem ersten Ausführungsbeispiel der Figuren 5 bis 7, mit dem Unterschied einer alternativen Ausgestaltung der Halteelemente 43.

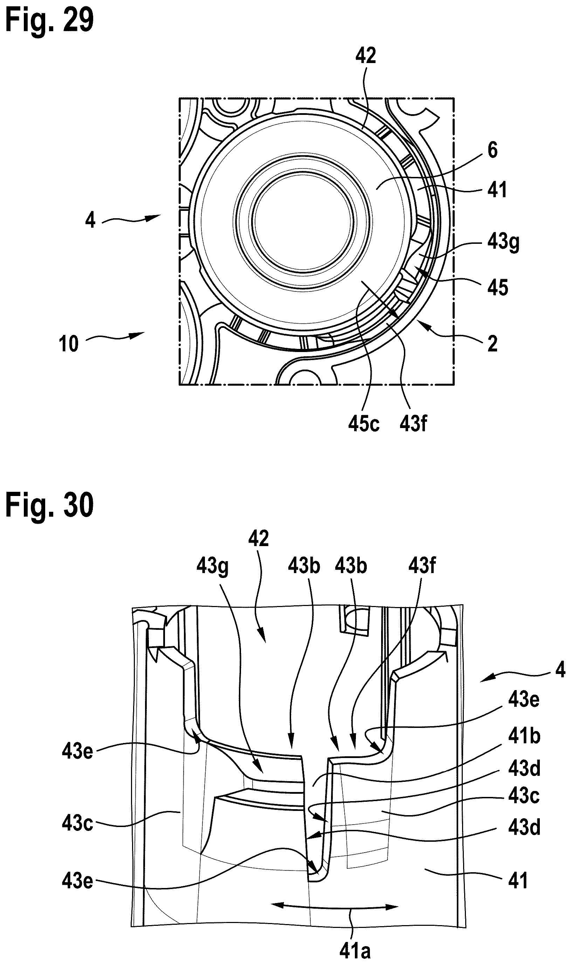

Die Halteelemente 43 sind dabei jeweils als ein Federarm 43b ausgebildet. Entlang einer Umfangsrichtung 41a der Wand 41 ist jeder Federarm 43b auf einer ersten Seite 43c vollständig mit der Wand 41 verbunden, und auf einer der ersten Seite 43c in Umfangsrichtung 41a gegenüberliegenden zweiten Seite 43d von einer Aussparung 41b begrenzt (vergleiche insbesondere Figur 30).

Die Aussparung 41b ist dabei als ein Längsschlitz ausgebildet, der die Wand 41 in radialer Richtung vollständig durchdringt.

Das Halteelement 43 ist dabei an einer Kante oder einer Schulter der Wand 41 angeordnet. Insbesondere ist die Aussparung 41b dabei entlang der Längsrichtung 70 einseitig offen ausgebildet.

Ferner ist das Halteelement 43 durch einen eingerückten Wandbereich oder alternativ durch einen ausgerückten Wandbereich der Wand 41 gebildet.

An den am Zellhalter 4 radial außen liegenden Zellaufnahmen 42 (vergleiche Figur 28) weist der Zellhalter dabei jeweils zwei unterschiedliche Halteelemente 43 auf, nämlich ein erstes Halteelement 43f und ein zweites Halteelement 43g. Die unterschiedlichen Halteelemente 43f, 43g sind jeweils als einseitige Federarme 43b ausgebildet, und werden durch die gleiche gemeinsame Aussparung 41b begrenzt (vergleiche Figur 30).

Das erste Halteelement 43f ist dabei so ausgebildet, dass dieses radial in die Zellaufnahme 42 vorsteht. Das zweite Halteelement 43g ist so ausgebildet, dass dieses radial nach außen absteht.

Insbesondere ist jeder der einseitigen Federarme 43b derart ausgebildet, dass dieser an dessen an die Aussparung 41b angrenzenden zweiten Seite 43d jeweils maximal in radialer Richtung vorsteht bzw. absteht. Insbesondere ist somit jeder Federarm 43b damit als geschwungenes, insbesondere kontinuierlich weiter vor- bzw. abstehendes Element bezüglich der radialen Richtung ausgebildet.

Jedes Halteelement 43 ist dabei über einen Radius 43e mit der Wand 41 verbunden. Insbesondere ist auch am Grund der Aussparung 41b ein Radius 43 vorgesehen (vergleiche Figur 30). Jeder Radius 43e bewirkt dabei einen insbesondere kontinuierlichen Übergang, wodurch eine spannungsoptimale Konstruktion des Zellhalters 4 bereitgestellt werden kann. Das heißt, Spannungsspitzen am Übergang zwischen Wand 41 und Halteelement 43 und/oder am Grund der Aussparung 41b können effektiv reduziert werden.

Die als Federarme 43b ausgebildeten Halteelemente 43 bieten dabei den Vorteil einer besonders zuverlässigen und robusten und spielfreien Einspannung der Batteriezellen 6 und des Zellhalters 4. Durch die nach radial innen vorstehenden ersten Halteelemente 43f werden dabei die Batteriezellen 6 spielfrei innerhalb der jeweiligen Aussparung 42 des Zellhalters 4 gehalten. Zudem wird durch die radial nach außen abstehenden zweiten Halteelemente 43g der Zellhalter 4 spielfrei mittels Haltekräften 45c innerhalb des Gehäuses 2 eingespannt und gehalten (vergleiche Figur 29).

## Patentansprüche

1. Zellhalter für einen Batteriepack (1), insbesondere für ein Elektrofahrrad (100), umfassend:
- eine im Wesentlichen hohlzylindrische Wand (41), welche zumindest teilweise eine Zellaufnahme (42) umschließt, die eingerichtet ist, zur Aufnahme einer Batteriezelle (6), und
- ein Halteelement (43), welches an der Wand (41) angeordnet ist,
- wobei eine Außenabmessung (42a) der Zellaufnahme (42) durch eine Zell-Außenabmessung (6a) der Batteriezelle (6) definiert ist, und
- wobei das Halteelement (43) radial in die Zellaufnahme (42) vorsteht und/oder absteht,
- wobei die Wand (41) eine Aussparung (41b) aufweist, die sich entlang der Zellaufnahme (42) erstreckt,
- wobei das Halteelement (43) als ein Federarm (43b) ausgebildet ist, wobei der Federarm (43b) in Umfangsrichtung (41a) der Wand (41) auf einer ersten Seite (43c) vollständig mit der Wand (41) verbunden und auf einer zweiten Seite (43d) von der Aussparung (41b) begrenzt ist.

2. Zellhalter nach Anspruch 1, wobei das Halteelement (43) über einen Radius (43e) mit der Wand (41) verbunden ist.

3. Zellhalter nach einem der vorhergehenden Ansprüche, wobei der Zellhalter (4) ein erstes Halteelement (43f) und ein zweites Halteelement (43g) aufweist, die jeweils als einseitige Federarme (43b) ausgebildet sind, wobei die Halteelemente (43f, 43g) in Umfangsrichtung (41a) durch die gleiche Aussparung (41b) begrenzt sind.

4. Zellhalter nach Anspruch 3, wobei das erste Halteelement (43f) radial in die Zellaufnahme (42) vorsteht und das zweite Halteelement (43g) radial nach außen absteht.

5. Zellhalter nach einem der vorhergehenden Ansprüche, wobei das Halteelement (43) an einer Kante oder einer Schulter der Wand (41) angeordnet ist.

6. Zellhalter nach einem der vorhergehenden Ansprüche, wobei das Halteelement (43) durch einen eingerückten Wandbereich oder einen ausgerückten Wandbereich gebildet wird.

7. Zellhalter nach einem der vorhergehenden Ansprüche, wobei die Wand (41) und das Halteelement (43) gemeinsam als ein einstückiges Bauteil ausgebildet sind.

8. Zellhalter nach einem der vorhergehenden Ansprüche, wobei das Halteelement (43) an einem vorbestimmten Wandbereich (44) der Wand (41) angeordnet ist, und wobei der Wandbereich (44) sich durchgängig mindestens 20% eines Umfangs und über mindestens 20% einer axialen Länge der Zellaufnahme (42) erstreckt.

9. Zellhalter nach Anspruch 8, wobei der Zellhalter (4) so ausgelegt ist, dass der Wandbereich (44) durch eine in der Zellaufnahme (42) aufgenommene Batteriezelle (6) nach radial außen elastisch verformt wird, um eine Haltekraft (45) auf die Batteriezelle (6) auszuüben.

10. Zellhalter nach einem der vorhergehenden Ansprüche, wobei die Wand (41) eine radiale Ausnehmung (46) aufweist, welche radial außerhalb des Halteelements (43) angeordnet ist.

11. Zellhalter nach einem der vorhergehenden Ansprüche, ferner umfassend ein erstes Federelement (47), welches eingerichtet ist, um eine erste Federkraft (47a) auf die Batteriezelle (6) im in dem Zellhalter (4) aufgenommenen Zustand auszuüben.

12. Zellhalter nach Anspruch 11, wobei das erste Federelement (47) gemeinsam mit der Wand (41) als ein einstückiges Bauteil ausgebildet ist, und wobei das erste Federelement (47) sich entlang einer Umfangsrichtung erstreckt.

13. Zellhalter nach einem der vorhergehenden Ansprüche, ferner umfassend ein zweites Federelement (48), welches eingerichtet ist, um eine zweite Federkraft (48a) auf die Batteriezelle (6) im in dem Zellhalter (4) aufgenommenen Zustand auszuüben, insbesondere wobei das zweite Federelement (48) gemeinsam mit der Wand (41) als ein einstückiges Bauteil ausgebildet ist, und vorzugsweise wobei das zweite Federelement (48) sich in axialer Richtung erstreckt.

14. Batterieanordnung, umfassend einen Batteriepack (1), welcher einen Zellhalter (4) nach einem der vorhergehenden Ansprüche und zumindest eine Batteriezelle (6) umfasst, wobei die Batteriezelle (6) in einer Zellaufnahme (42) des Zellhalters (4) angeordnet ist, vorzugsweise ferner umfassend ein Gehäuse (2), in welches der Batteriepack (1) aufgenommen werden kann.

15. Elektrofahrrad, umfassend eine Batterieanordnung (10) nach Anspruch 14.
